# EUROPEAN PATENT APPLICATION

(11) **EP 4 645 992 A1**
(43) Date of publication of application: **05.11.2025**
(21) Application number: 23910372.4
(22) Date of filing: 22.12.2023
(51) Int. Cl.: H04W 72/21

(54) **INDICATION METHOD, AND DEVICE AND READABLE STORAGE MEDIUM**

(30) Priority: 29.12.2022 CN 202211713219
(71) Applicant: Vivo Mobile Communication Co., Ltd., Dongguan, Guangdong 523863 (CN)
(72) Inventor: ZENG, Chaojun, Dongguan, Guangdong 523863 (CN); YOU, Huazheng, Dongguan, Guangdong 523863 (CN); PAN, Xueming, Dongguan, Guangdong 523863 (CN)
(74) Representative: Lavoix
(86) International application number: PCT/CN2023/140872
(87) International publication number: WO 2024/140446

(57) **Abstract**

This application discloses an indication method, a device, and a readable storage medium, and belongs to the field of communication technologies. The method includes: sending, by a terminal, first indication information to a network device in a duration when service data continues and/or a duration when a CG resource is active; where the CG resource includes at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

## Description

### CROSS-REFERENCE TO RELATED APPLICATIONS

This application claims priority to Chinese Patent Application No.202211713219.7 filed on December 29, 2022, which is incorporated herein by reference in its entirety.

### TECHNICAL FIELD

This application belongs to the field of communication technologies, and specifically, relates to an indication method, a device, and a readable storage medium.

### BACKGROUND

When a configured grant (Configured Grant, CG) resource is configured in an uplink direction to carry extended reality (eXtended Reality, XR) service data, an indication of an unused configured grant physical uplink shared channel occasion (Unused Configured Grant Physical Uplink Shared Channel occasion, Unused CG PUSCH occasion) based on uplink control information (Uplink Control Information, UCI) has been supported at present, but a specific indication operation and procedure have not been determined.

### SUMMARY

Embodiments of this application provide an indication method, a device, and a readable storage medium, which can solve the problem that a specific indication solution of CG PUSCH occasions has not yet been determined.

According to a first aspect, an indication method is provided, including:
sending, by a terminal, first indication information to a network device in a duration when service data continues and/or a duration when a configured grant CG resource is active;
where the CG resource includes at least one configured grant physical uplink shared channel occasion CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

According to a second aspect, an indication apparatus is provided, the apparatus being applied to a terminal, and the apparatus including:
a sending module, configured to send first indication information to a network device in a duration when service data continues and/or a duration when a CG resource is active;
where the CG resource includes at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

According to a third aspect, an indication method is provided, including:
receiving, by a network device, first indication information from a terminal in a duration when service data continues and/or a duration when a configured grant CG resource is active; and
re-allocating, by the network device according to the first indication information, time-frequency resources corresponding to unused CG PUSCH occasions;
where the CG resource includes at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

According to a fourth aspect, an indication apparatus is provided, the apparatus being applied to a network device and including:
a receiving module, configured to receive first indication information from a terminal in a duration when service data continues and/or a duration when a configured grant CG resource is active; and
where the CG resource includes at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

According to a fifth aspect, a terminal is provided, the terminal including a processor and a memory, the memory storing a program or an instruction executable on the processor, and when the program or instruction is executed by the processor, steps of the indication method as described in the first aspect being implemented.

According to a sixth aspect, a terminal is provided, including a processor and a communication interface, where the communication interface is used for the terminal to send first indication information to a network device in a duration when service data continues and/or a duration when a configured grant CG resource is active;
where the CG resource includes at least one configured grant physical uplink shared channel occasion CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

According to a seventh aspect, a network device is provided, the network device including a processor and a memory, the memory storing a program or an instruction executable on the processor, and when the program or instruction is executed by the processor, steps of the indication method as described in the third aspect being implemented.

According to an eighth aspect, a network device is provided, including a processor and a communication interface, where the communication interface is used for the network device to receive first indication information from a terminal in a duration when service data continues and/or a duration when a configured grant CG resource is active; and the network device re-allocates, according to the first indication information, time-frequency resources corresponding to unused CG PUSCH occasions;
where the CG resource includes at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

According to a ninth aspect, a communication system is provided, including: a terminal and a network device, where the terminal may be configured to perform steps of the method as described in the first aspect, and the network device may be configured to perform steps of the method as described in the third aspect.

According to a tenth aspect, a readable storage medium is provided, the readable storage medium having a program or an instruction stored therein, and when the program or instruction is executed by a processor, steps of the method as described in the first aspect being implemented, or steps of the method as described in the third aspect being implemented.

According to an eleventh aspect, a chip is provided, the chip includes a processor and a communication interface, the communication interface being coupled to the processor, and the processor being configured to run a program or an instruction to implement steps of the method as described in the first aspect or implement steps of the method as described in the third aspect.

According to a twelfth aspect, a computer program/program product is provided, the computer program/program product being stored in a storage medium, and the computer program/program product being executed by at least one processor to implement steps of the method as described in the first aspect or implement steps of the method as described in the third aspect.

In this embodiment of this application, in a duration when service data continues and/or a duration when a CG resource is active, the terminal indicates to the network device positions or indexes of used CG PUSCH occasions and/or unused CG PUSCH occasions in the CG resource, or indicates time periods corresponding to the used CG PUSCH occasions and/or time periods corresponding to the unused CG PUSCH occasions in the CG resource, or indicates, in a preset indication cycle, the used CG PUSCH occasions and/or the unused CG PUSCH occasions in the CG resource. Therefore, in the duration of the service data and/or during the activation of the CG resource, the terminal continuously indicates a use status of a CG PUSCH occasion to the network device, to actually improve resource utilization efficiency and capacity performance when high-layer service data is served based on the CG resource.

### BRIEF DESCRIPTION OF THE DRAWINGS

FIG. 1 is a block diagram of an applicable wireless communication system according to an embodiment of this application;
FIG. 2 is a first schematic flowchart of an indication method according to an embodiment of this application;
FIG. 3a is a first schematic diagram of an application scenario according to an embodiment of this application;
FIG. 3b is a first schematic diagram of an application scenario according to an embodiment of this application;
FIG. 4 is a second schematic flowchart of an indication method according to an embodiment of this application;
FIG. 5 is a first schematic structural diagram of an indication apparatus according to an embodiment of this application;
FIG. 6 is a second schematic structural diagram of an indication apparatus according to an embodiment of this application;
FIG. 7 is a schematic structural diagram of a communication device according to an embodiment of this application;
FIG. 8 is a schematic structural diagram of a terminal according to an embodiment of this application; and
FIG. 9 is a schematic structural diagram of a network device according to an embodiment of this application.

### DETAILED DESCRIPTION

The technical solutions in the embodiments of this application are clearly described in the following with reference to the accompanying drawings in the embodiments of this application. Apparently, the described embodiments are merely some rather than all of the embodiments of this application. Based on the embodiments of this application, all other embodiments obtained by a person of ordinary skill in the art fall within the protection scope of this application.

The terms such as "first" and "second" in the specification and claims of this application are used for distinguishing similar objects, but are not used for describing a specific sequence or order. It will be appreciated that the terms used in this way are exchangeable in a proper case, so that the embodiments of this application can be implemented in an order different from the order shown or described herein, and objects distinguished by "first" and "second" are usually of a same category and a quantity of the objects is not defined. For example, there may be one or more first objects. In addition, the expression "and/or" in the specification and claims represents at least one of connected objects, and the character "/" generally represents that the associated objects are in an "or" relationship.

It should be noted that, the technology described in the embodiments of this application is not limited to a long term evolution (Long Term Evolution, LTE)/LTE evolution (LTE-Advanced, LTE-A) system, but may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are generally interchangeably used, and the technologies described may be applied to the systems and radio technologies mentioned above, and may also be applied to other systems and radio technologies. The following description describes a new radio (New Radio, NR) system for illustration, and NR terminology is used in most of the following descriptions, but these technologies may also be applied to applications other than NR system applications, such as 6^{th} generation (6^{th} Generation, 6G) communication systems.

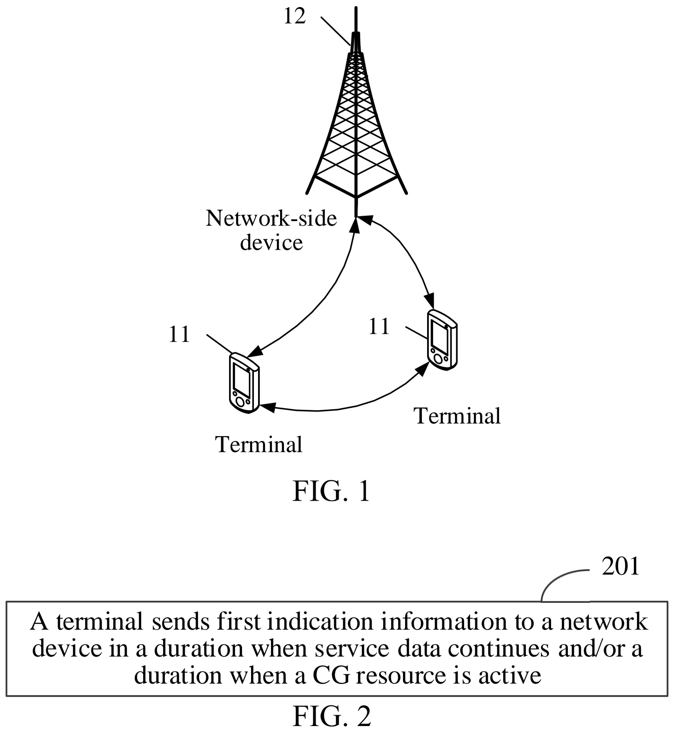

FIG. 1 is a block diagram of an applicable wireless communication system according to an embodiment of this application. The wireless communication system includes a terminal 11 and a network device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), a smart home (home devices with wireless communication functions, such as a refrigerator, a television, a washing machine, or furniture), a game console, a personal computer (Personal Computer, PC), an automated teller machine, or a self-service machine. The wearable device includes: a smart watch, a smart band, a smart headset, smart glasses, smart jewelry (a smart bracelet, a smart hand chain, a smart ring, a smart necklace, a smart bangle, a smart anklet, and the like), a smart wrist strap, a smart dress, and the like. It should be noted that, a specific type of the terminal 11 is not limited in this embodiment of this application. The network device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a WiFi node, and the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or another proper term in the art. As long as the same technical effect is achieved, the base station is not limited to a specific technical word. It should be noted that, only the base station in the NR system is used as an example for description in the embodiments of this application, but a specific type of the base station is not limited.

To better understand the technical solutions of this application, the following content will be first described:

### Extended reality (eXtended reality, XR) service

Extended reality (eXtended reality, XR) refers to all real and virtual combined environments and human-computer interactions generated by computer technologies and wearable devices. The extended reality includes representative forms such as augmented reality (Augmented Reality, AR), mixed reality (Mixed Reality, MR), and virtual reality (Virtual Reality, VR), and cross fields thereof. A level of a virtual world ranges from partial sensory input to full immersion in virtual reality. A key aspect of XR is extension of human experience, especially experience related to a sense of existence (represented by VR) and acquisition of cognition (represented by AR).

For a VR service, an uplink is dominated by transmission of relatively dense small data packets, and the small data packets may carry information such as gestures and control, as inputs and references for downlink data presentation. A downlink is dominated by transmission of multimedia data such as videos and audios, and through timely reception and presentation of such multimedia data, a user is provided with a sense of immersion. Taking downlink video data as an example, the video data may be modeled as a video frame (Video frame) based on frames per second (Frames Per Second, FPS) (a frame rate), and a typical value of the FPS is 60 or 120. These Video frames periodically or quasi-periodically arrive based on a cycle (which is 1/FPS second) determined by the FPS, and sizes of the Video frames dynamically change. Generally, each Video frame needs to be successfully transmitted within 10 milliseconds (ms) on an air interface, and a transmission success rate is required to be no less than 99% or even 99.9%. In addition, downlink video data generally requires a very high data rate, and generally up to tens or even hundreds of megabits per second (Mbps) (a typical value is 30/45 Mbps).

For the AR service, in addition to the transmission of the above dense small data packets, the uplink may also transmit multimedia data such as videos, audios, and scenario images. The uplink has similar service characteristics to the downlink. Generally, the data rate is relatively low, for example, tens of Mbps at most (a typical value is 10/20 Mbps). A time limit for air-interface transmission may also be relaxed. For example, each Video frame is generally required to be successfully transmitted within 30 ms. A downlink data transmission characteristic is substantially consistent with that of the VR service.

### CG enhancement for XR service

Various enhancement technologies are researched and analyzed for improvement of Power saving and Capacity performance of an XR service. To improve the Capacity performance of the XR service, mainly, various enhancement solutions are discussed and evaluated for configured grant based transmission CG (Configured Grant based transmission), semi-persistent scheduling (Semi-persistent scheduling, SPS) based transmission (Semi-persistent scheduling based transmission), and dynamic grant (Dynamic Grant, DG) based transmission (Dynamic Grant based transmission). The following agreement has been reached for a CG-related enhancement solution:
A UE is supported to dynamically indicate an unused CG physical uplink shared channel Physical Uplink Shared Channel, PUSCH) occasion based on uplink control information (Uplink Control Information, UCI) (for example, CG-UCI or new UCI).

Based on a feature (Video frames periodically or quasi-periodically arrive; a data volume corresponding to each Video frame is relatively large, but a size dynamically changes) and a transmission requirement (low latency and high reliability) of uplink multimedia data of the AR service, the foregoing agreement (Agreement) may be understood as follows:
To avoid or shorten a delay caused by a scheduling request (Scheduling Request, SR) and/or buffer status report (BSR) process, the network device pre-configures more CG PUSCH occasions to carry the uplink multimedia data (mainly video data) of the AR service. For example, for each Video frame, a plurality of CG PUSCH occasions are available. When data corresponding to a Video frame arrives, corresponding data transmission may be directly initiated by using configured CG PUSCH occasions nearby, thereby improving delay performance.

When a data volume of a Video frame is relatively small, resulting in surplus configured CG PUSCH occasions, the UE may indicate to the network device which CG PUSCH occasions are actually unused. Herein, the dynamic indication based on uplink control information (Uplink Control Information, UCI) may be understood as a port physical layer (Port Physical Layer, PHY) indication for occupation of CG PUSCH occasions by each Video frame, so that the network device may learn and determine actually unused CG PUSCH occasions as soon as possible and use time-frequency resources corresponding thereto for another purpose (for example, allocate resources for retransmission of the UE or allocate resources to another UE), to fully use time-frequency resources in a cell to prevent a waste caused by vacancy.

When a data volume of a Video frame is relatively large, resulting in that a configured CG PUSCH occasion is insufficient to carry the data volume thereof, the network device may be notified to allocate additional DG resources based on Legacy or an enhanced buffer status report (Buffer Status Report, BSR) process.

The indication method provided in this embodiment of this application is described below in detail through some embodiments and application scenarios thereof in conjunction with the accompanying drawings.

Referring to FIG. 2, an embodiment of this application provides an indication method. The method is performed by a terminal. The method includes the following steps:
Step 201: A terminal sends first indication information to a network device in a duration when service data continues and/or a duration when a CG resource is active. The first indication information may also be referred to as resource recycling information. That is, the terminal sends the first indication information to a network side, i.e., the terminal indicates the resource recycling information to the network device.

The CG resource includes at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

In this embodiment of this application, in a duration when service data continues and/or a duration when a CG resource is active, the terminal indicates to the network device positions or indexes of used CG PUSCH occasions and/or unused CG PUSCH occasions in the CG resource, or indicates time periods corresponding to the used CG PUSCH occasions and/or time periods corresponding to the unused CG PUSCH occasions in the CG resource, or indicates in a preset indication cycle, the used CG PUSCH occasions and/or the unused CG PUSCH occasions in the CG resource. Therefore, in the duration of the service data and/or during the activation of the CG resource, the terminal continuously indicates a use status of a CG PUSCH occasion to the network device, to actually improve resource utilization efficiency and capacity performance when high-layer service data is served based on the CG resource.

It should be noted that, the service data may be specifically service data from a high layer (for example, an application layer, or an upper layer of an air-interface protocol layer of the terminal, or an upper layer of a physical layer of the terminal), for example, Video frames of an XR service. In this application, service data or high-layer service data is described when a solution is described. A specific type of the service data is not limited in this embodiment of this application.

The used CG PUSCH occasions may also be understood as CG PUSCH occasions that need to be used, and the unused CG PUSCH occasions may also be understood as CG PUSCH occasions that do not need to be used. Herein, a time sequence of whether the terminal has actually used CG PUSCH occasions and the terminal sending indication information to the network device is not limited. For example, the terminal may send the indication information to the network device as long as the CG PUSCH occasions that need to be used and/or the CG PUSCH occasions that do not need to be used have been determined.

In this embodiment of this application, a mapping relationship does not exist or does not need to be established between the high-layer service data (for example, the Video frames of the XR service) and the CG PUSCH occasions. The UE continuously indicates a Used/Unused status of the CG resource to the network device in a duration when a high-layer service continues and/or a duration when the CG resource is active. Subsequently, the network device may adjust the CG resource according to used CG PUSCH occasions and/or unused CG PUSCH occasions indicated by the terminal. For example, when a data volume of a piece of service data is relatively small and there are surplus configured CG PUSCH occasions, the network device may learn and determine actually unused CG PUSCH occasions and use time-frequency resources corresponding thereto for another purpose (for example, allocate resources for retransmission of the UE or allocate resources to another UE), to fully use time-frequency resources in a cell to prevent a waste caused by vacancy.

Optionally, each CG PUSCH occasion that carries the high-layer service data (such as the Video frames of the XR service) is required to meet a predefined condition.

In a possible implementation, the CG PUSCH occasion satisfies at least one of the following:
(1) The CG PUSCH occasion corresponds to an activated and non-released first CG configuration (which may be denoted as CG Config).
   Optionally, the first CG configuration may further satisfy at least one of the following:
   (1.1) a serving cell corresponding to the first CG configuration corresponds to a first carrier, the first carrier is an exclusive carrier carrying first service data or the first carrier belongs to an exclusive carrier set carrying first service data, and the first service data is any piece of service data corresponding to the terminal; and
   (1.2) the first CG configuration is used only for carrying second service data, and the second service data is any piece of service data corresponding to the terminal. For example, a Config index corresponding to the CG Config is located in and/or only located in an allowdCG-List corresponding to a Logical channel corresponding to high-layer service data. The allowedCG-List herein is used as an allowed CG configuration list and is used for limiting a CG configuration that can carry data corresponding to the Logical channel. A CG PUSCH occasion corresponding to a CG Config is allowed to carry data corresponding to a Logical channel only when a Config index corresponding to the CG Config is located in an allowedCG-List configured for the Logical channel. A Logical channel corresponding to the high-layer service data may be any Logical channel corresponding to the high-layer service data or a Logical channel that satisfies a predefined requirement and corresponds to the high-layer service data. The predefined requirement herein may be: corresponding to a quality of service flow (Quality of Service flow, QoS flow) or a data radio bearer (Data Radio Bearer, DRB) that has a particular attribute (for example, a Priority/Importance of a carried protocol data unit set (Protocol Data Unit set, PDU set) is a predefined value or is higher than/no lower than a predefined value).
(2) The CG PUSCH occasion is a Valid CG PUSCH occasion (Valid CG PUSCH occasion).
   The Valid CG PUSCH occasion may be understood as follows: A symbol (Symbol) occupied by the CG PUSCH occasion is not a semi-static (Semi-static) DL symbol, and/or is not indicated as a dynamic flexible symbol (Dynamic flexible symbol) by a DCI format (format) 2_0 or is not indicated as a down link (Down Link, DL) by dynamic scheduling downlink control information (Downlink Control Information, DCI).
(3) A transport block (Transport Block, TB) size (size) corresponding to the CG PUSCH occasion is greater than or equal to a preset TB size threshold.
(4) A physical priority (PHY priority) corresponding to the CG PUSCH occasion satisfies a preset PHY priority value; (or a PHY priority configured for the CG Config corresponding to the CG PUSCH occasion satisfies a preset PHY priority value).

For example, the PHY priority is required to be 1.

That is, each CG PUSCH occasion is required to satisfy at least one of the predefined condition corresponding to (1) to (4) above.

The sending first indication information in step 201 may relate to ordering (determination of a sequence) of the CG PUSCH occasion or determination of an index.

In a possible implementation, the method further includes:
in a case that a carrier aggregation (Carrier Aggregation, CA) scenario is not supported or ordering or indexing of a plurality of CG PUSCH occasions (in this embodiment of this application, the plurality is specifically at least two) is determined only in a range of a single serving cell, determining, by the terminal, the ordering or indexing of the plurality of CG PUSCH occasions according to at least one of the following:
(1) a start moment or an end moment of the CG PUSCH occasion;
(2) a configuration index of a CG configuration corresponding to the CG PUSCH occasion; and
(3) a TB size, a quantity of frequency-domain physical resource blocks (Physical Resource Block, PRB), and/or a quantity of time-domain symbols that correspond to the CG PUSCH occasion.

In a case that the CA scenario is not considered or supported, optionally, the UE does not expect a CG PUSCH occasion corresponding to high-layer service data to correspond to more than one serving cell (Serving cell) (i.e., be located on more than one Serving cell), or the UE considers only a CG PUSCH occasion corresponding to a single Serving cell (for example, a Serving cell with a minimum index).

In a possible implementation, the method further includes:
in a case that a CA scenario is supported or determination of ordering or indexing of a plurality of CG PUSCH occasions across serving cells is supported, determining, by the terminal, the ordering or indexing of the plurality of CG PUSCH occasions according to at least one of the following:
(1) a start moment or an end moment of the CG PUSCH occasion;
(2) an index of a serving cell which the CG PUSCH occasion is located in or corresponds to;
(3) a configuration index of a CG configuration corresponding to the CG PUSCH occasion; and
(4) a TB size, a quantity of PRBs, and/or a quantity of time-domain symbols that correspond to the CG PUSCH occasion.

For example, when the CA scenario is supported, a traversal mechanism similar to a downlink assignment index (DAI) numbering mechanism may be used. Specifically, the following examples may be distinguished and corresponding operations may be performed:
Example 1: For two CG PUSCH occasions with different start/end moments, the CG PUSCH occasion with an earlier start/end moment is traversed first (or assigned a smaller index).
Example 2: For two CG PUSCH occasions with equal start/end moments, when indexes of Serving cells corresponding thereto are different, the CG PUSCH occasion corresponding to the Serving cell with a smaller index is traversed first (or assigned a smaller index).
Example 3: When start/end moments of two CG PUSCH occasions are equal and indexes of corresponding Serving cells are the same, the CG PUSCH occasions have overlapping (at least in a time domain). In this case, Config indexes (index) of CG configurations (Config) corresponding thereto should be different (assuming that CG PUSCH occasions corresponding to a same CG Config do not have overlapping in the time domain), the CG PUSCH occasion corresponding to the CG Config with a smaller Config index is traversed first (or assigned a smaller index).

Optionally, for Example 3, a traversing order may alternatively be determined based on TB sizes/quantities of frequency-domain PRBs/quantities of time-domain symbols corresponding to the CG PUSCH occasions. For example, assuming that a CG PUSCH occasion with a larger TB size is preferentially occupied, when TB sizes corresponding to two CG PUSCH occasions are different, the CG PUSCH occasion with a larger TB size is traversed first (or assigned a smaller index).

It may be understood that, optionally, in a case that the CA scenario is not supported or the CA scenario is supported, the CG PUSCH occasions herein are required to satisfy the predefined condition that the CG PUSCH occasions need to satisfy.

In this embodiment of this application, several specific methods for indicating, to the network device, used CG PUSCH occasions and/or unused CG PUSCH occasions in a CG resource corresponding to service data. An indication of the UE to the network device is carried by UCI, which may be CG-UCI or UCI similar to a processing manner of the CG-UCI (in this case, the UCI is carried on a CG PUSCH), or a newly introduced UCI (in this case, the UCI may be carried on a PUCCH or a PUSCH). This is not specifically limited in this embodiment of this application.

Indication manner 1: Assuming that the UE occupies consecutive CG PUSCH occasion(s) in an Occasion set, the UE indicates start positions (indexes) and/or end positions (indexes) or duration numbers of Used/Unused CG PUSCH occasion(s) in the Occasion set.

In a possible implementation, the sending, by a terminal, first indication information to a network device includes:
indicating, by the terminal, at least one of the following to the network device. That is, the first indication information indicates at least one of the following:
(1) start positions or start indexes of the used CG PUSCH occasions;
(2) end positions or end indexes of the used CG PUSCH occasions;
(3) a quantity of the used CG PUSCH occasions, which may specifically be a quantity of consecutively used CG PUSCH occasions;
(4) start positions or start indexes of the unused CG PUSCH occasions;
(5) end positions or end indexes of the unused CG PUSCH occasions; and
(6) a quantity of the unused CG PUSCH occasions, which may specifically be a quantity of consecutively unused CG PUSCH occasions;

It may be understood that, when a position or an index of a CG PUSCH occasion needs to be indicated, at least one of the following may be indicated to identify the CG PUSCH occasion:
(1) a time-domain unit corresponding to a start/end moment of the CG PUSCH occasion, including a radio frame, a slot, a symbol, and the like;
(2) an index of a Serving cell which the CG PUSCH occasion is located in/corresponds to;
(3) a Config index of a CG configuration corresponding to the CG PUSCH occasion;
(4) an index (which may be numbered from 0 or 1) of the CG PUSCH occasion in CG PUSCH occasion(s) since configuration/reconfiguration of a corresponding CG Config or since last activation; and
(5) an index (which may be numbered from 0 or 1) of the CG PUSCH occasion in all CG PUSCH occasion(s) configured for a high-layer service since start/restart of the high-layer service.

Specifically, the following manners may be used for the foregoing indication manner 1:
Indication manner 1-1: The UE indicates information corresponding to Used CG PUSCH occasion(s) used for carrying current high-layer service data.

In a possible implementation, the sending, by a terminal, first indication information to a network device further includes:
sending, by the terminal, first information corresponding to the used CG PUSCH occasions to the network device;
where the first information is used for indicating N used CG PUSCH occasions starting from a first used CG PUSCH occasion (the first used CG PUSCH occasion is the first one), or the first information is used for indicating all used CG PUSCH occasions from a first used CG PUSCH occasion (First used CG PUSCH occasion) to a last used CG PUSCH occasion (Last used CG PUSCH occasion), and N is a positive integer; and
where the first used CG PUSCH occasion is either of the following:
   (1) A first CG PUSCH occasion that carries the service data The service data herein may be understood as an uplink to-be-transmitted service data item recently received from a service source before the terminal sends the first information, for example, a recent Video frame.
   (2) A first CG PUSCH occasion that carries uplink control information UCI corresponding to the first indication information

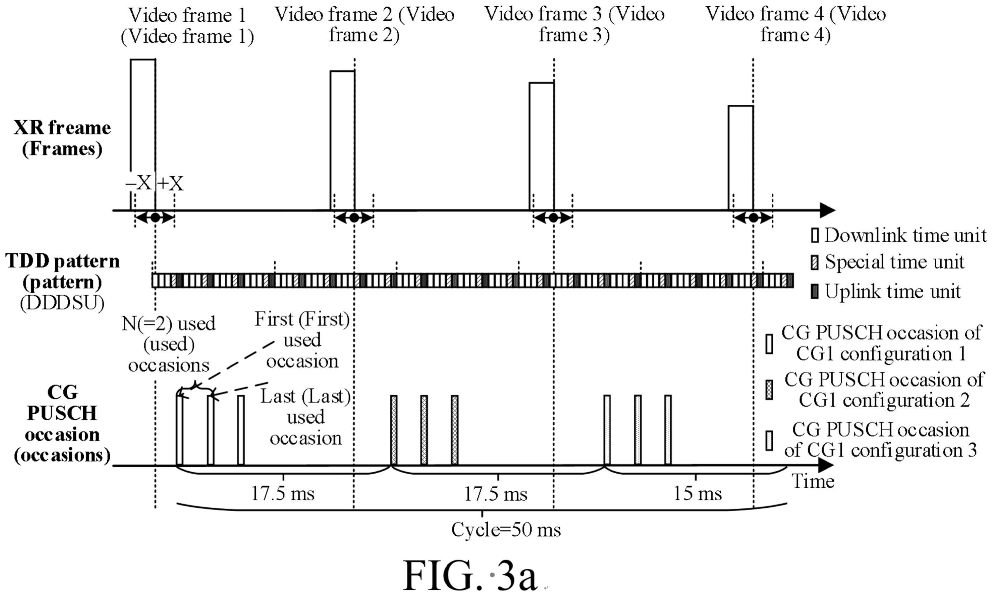

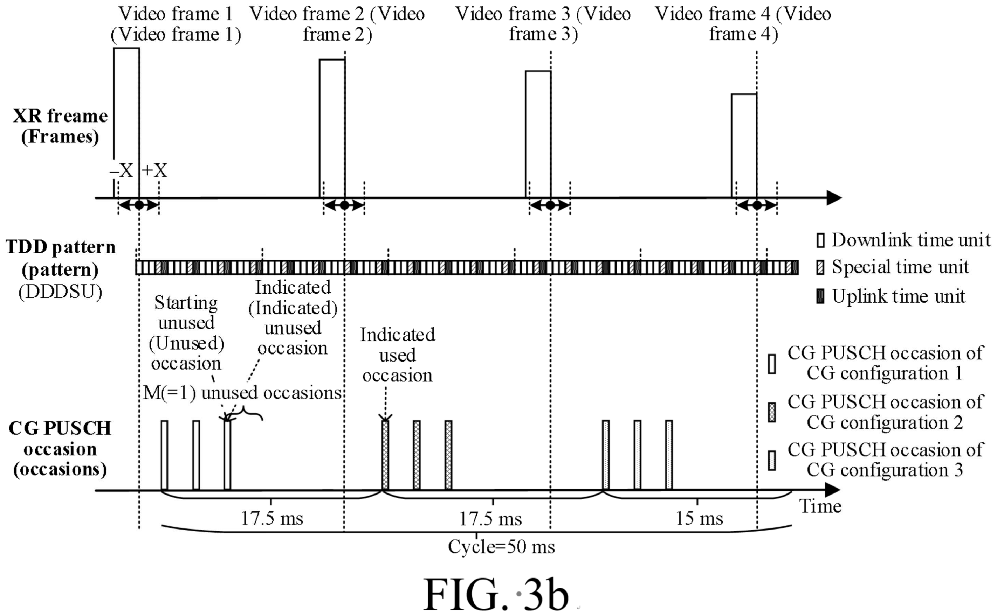

Specifically, referring to an application scenario shown in FIG. 3a, a Video frame corresponds to 60 FPS, and a serving cell uses a conventional DDDSU (D denotes a downlink time unit, S denotes a special time unit, and U denotes an uplink time unit, that is, arranged in a sequence of three downlink time units, one special time unit, and one uplink time unit) as a TDD pattern (a time division duplex pattern). To ensure that configured CG PUSCH occasions are actually available, when CG configuration parameters (that is, configuration parameters corresponding to a CG Config) is determined, it may be ensured that the CG PUSCH occasions correspond to the uplink time units in the TDD pattern. In addition, when a plurality of CG PUSCH occasions may be configured in a single cycle of a single CG Config, considering that non-integer periodicity (non-integer periodicity) corresponding to the Video frame does not match a cycle value that may be configured for the CG Config, a plurality of CG Configs may be configured to configure a suitable CG resource for the Video frame. In FIG. 3a, 3 CG Configs are configured, a cycle of each CG Config is 50 ms, and it is ensured, through proper offset configuration, that CG PUSCH occasion(s) configured by the CG Configs in a single cycle are aligned with expected arrival moments of the corresponding Video frames as much as possible. In FIG. 3a, 3 CG PUSCH occasions are configured for each CG Config in a single cycle, and CG PUSCH occasions corresponding to different CG Configs are distinguished by using different filling patterns. It should be noted that, FIG. 3a shows only a scenario in which an Occasion set includes 3 CG PUSCH occasions. A quantity of CG PUSCH occasions included in one Occasion set is not specifically limited in this application, and whether the CG PUSCH occasions included in each Occasion set correspond to identical or different CG Configs is not limited.

The UE indicates N Used CG PUSCH occasion(s) starting from a First used CG PUSCH occasion (that is, a start position) or all Used CG PUSCH occasion(s) starting from the First used CG PUSCH occasion (that is, the start position) to a Last used CG PUSCH occasion (that is, an end position).

The First used CG PUSCH occasion may be either of (1) and (2) below:
(1) A first CG PUSCH occasion that carries high-layer service data for the UE

The first used CG PUSCH occasion may be determined in any one of the following manners:
(a) Blindly detected by the network device

Taking video frames of an XR service as an example of the high-layer service data, Video frames periodically (when Jitter does not exist) or quasi-periodically (when Jitter exists) arrive at a UL buffer of the UE, and two sides of an FPS corresponding to a cycle may alternatively be predicted in advance. When Jitter is not considered, offsets of the video frames relative to cycles may alternatively be basically understood to be consistent on two sides based on implementation or in a manner such as BSR/UAI reporting. Therefore, it may be considered that when Jitter is not considered, expected arrival moments of the video frames are understood to be consistent on two sides. The expected arrival moment of each Video frame may be understood as an expected latest moment when a PDU (or an IP packet) corresponding to the Video frame reaches an air-interface UL buffer, which may be determined or approximately determined based on a cycle and an offset.

When there is no Jitter for arrival of a Video frame, the network device may start to detect, from a first CG PUSCH occasion after an expected arrival moment of a Video frame, whether the Video frame is actually occupied by the UE and/or carries data corresponding to the Video frame, to determine the first CG PUSCH occasion carrying the high-layer service data for the UE.

When there is Jitter for arrival of a Video frame, assuming that an uplink Jitter range may be basically understood to be consistent on two sides based on implementation or in a manner such as UAI reporting and the Jitter range is [-X, +X] (a unit is an absolute time unit such as ms, or a time-domain unit such as a slot or a symbol), the network device may start to detect, from a first CG PUSCH occasion after (an expected arrival moment of a Video frame -X), whether the Video frame is actually occupied by the UE and/or carries data corresponding to the Video frame, to determine the first CG PUSCH occasion carrying the high-layer service data for the UE.

It should be noted that whether a CG PUSCH occasion is actually used by the UE may be detected based on DM-RS (for example, by using energy detection or sequence detection). In addition, whether the CG PUSCH occasion actually used by the UE carries the high-layer service data may be identified by using an LCID in a carried TB. For example, an LCID of a MAC Sub-PDU in the TB corresponds to at least one Logical channel corresponding to the high-layer service data.

### (b) Explicitly indicated by the UE

In this case, the First used CG PUSCH occasion may be indicated in same UCI as a value N or the last used CG PUSCH occasion (in this case, the network device may still need to detect a Used CG PUSCH occasion blindly, for example, the network device detects a Used CG PUSCH occasion blindly, and determines, based on UCI carried in the Used CG PUSCH occasion, that the Used CG PUSCH occasion (the blindly detected Used CG PUSCH occasion carries current high-layer service data) or a subsequent Used CG PUSCH occasion (the blindly detected Used CG PUSCH occasion does not carry the current high-layer service data) is the First used CG PUSCH occasion), or may be indicated in independent UCI. In this case, the independent UCI may be carried in a PUCCH or another PUSCH.

It may be understood that, in addition to this manner, other manners of determining the First used CG PUSCH occasion do not require the UE to explicitly indicate the First used CG PUSCH occasion.

### (2) A first CG PUSCH occasion that carries UCI corresponding to resource recycling information

It is assumed herein that the UE carries UCI in a CG PUSCH occasion (that is, the UCI is carried on a CG PUSCH) and uses the UCI to carry resource recycling information only when the UE needs to indicate the resource recycling information to the network device by using the UCI. In addition, it is assumed that the network device determines, through blind detection, whether a CG PUSCH occasion (actually used by the UE) carries UCI carrying resource recycling information.

For the N Used CG PUSCH occasion(s) starting from the First used CG PUSCH occasion (that is, the start position), the value N may be indicated in the UCI by the UE.

When the UE indicates the Last used CG PUSCH occasion, either of (1) and (2) below may be used:
(1) the UE explicitly indicates a position or an index of the Last used CG PUSCH occasion; and
(2) the UE (may use 1 bit) indicates whether an actually used CG PUSCH occasion is the Last used CG PUSCH occasion.

When indicating that the actually used CG PUSCH occasion is the Last used CG PUSCH occasion (for example, when having completed transmission of current high-layer service data by using used CG PUSCH occasion(s), the UE indicates that a last CG PUSCH occasion in the Used CG PUSCH occasion(s) is the Last used CG PUSCH occasion), the UE and the network device may consider that CG PUSCH occasion(s) starting from a next CG PUSCH occasion may be Unused CG PUSCH occasion(s) (two sides further determine a next First used CG PUSCH occasion, and consider that all CG PUSCH occasion(s) from a next CG PUSCH occasion to the next First used CG PUSCH occasion are Unused CG PUSCH occasion(s)).

It is assumed herein that the UE carries UCI in each actually occupied CG PUSCH occasion (that is, the UCI is carried on the CG PUSCH) and indicates whether the CG PUSCH occasion is the Last used CG PUSCH occasion (for example, which is indicated by using 1 bit, and is the Last used CG PUSCH occasion when the value is 1).

Specifically, the following manners may be used for the foregoing indication manner 1:
Indication manner 1-2: The UE indicates information corresponding to Unused CG PUSCH occasion(s) after transmission of current high-layer service data is completed.

In a possible implementation, the sending, by a terminal, first indication information to a network device further includes:
sending, by the terminal, second information corresponding to the unused CG PUSCH occasions to the network device.

In this embodiment of this application, the UE indicates information corresponding to Unused CG PUSCH occasion(s) after completion of carrying of current high-layer service data. That is, the UE may send an indication as long as the unused CG PUSCH occasions are determined (which may be before or after an actual data transmission operation, and is not limited).

The second information is used for indicating any one of the following:
(1) Starting from a first unused CG PUSCH occasion, all CG PUSCH occasions previous to a first CG PUSCH occasion (which is denoted as an Indicated unused CG PUSCH occasion) do not need to be used. It should be noted that, the unused CG PUSCH occasions indicated in (1) do not include the "first CG PUSCH occasion".
(2) All CG PUSCH occasions from the first unused CG PUSCH occasion to the first CG PUSCH occasion do not need to be used. It should be noted that, the unused CG PUSCH occasions indicated in (2) include the "first CG PUSCH occasion".
(3) M CG PUSCH occasions starting from the first unused CG PUSCH occasions do not need to be used, M being a positive integer.

The first unused CG PUSCH occasion is explicitly indicated in the UCI by the terminal, or the first unused CG PUSCH occasion is implicitly determined according to a UCI transmission status.

Specifically, referring to an application scenario shown in FIG. 3b, a Video frame corresponds to 60 FPS, and a serving cell uses a conventional DDDSU as a TDD pattern (a time division duplex pattern). To ensure that configured CG PUSCH occasions are actually available, when CG configuration parameters (that is, configuration parameters corresponding to a CG Config) is determined, it may be ensured that the CG PUSCH occasions correspond to the uplink time units in the TDD pattern. In addition, when a plurality of CG PUSCH occasions may be configured in a single cycle of a single CG Config, considering that on-integer periodicity (on-integer periodicity) corresponding to the Video frame does not match a cycle value that may be configured for the CG Config, a plurality of CG Configs may be configured to configure a suitable CG resource for the Video frame. In FIG. 3b, 3 CG Configs are configured, a cycle of each CG Config is 50 ms, and it is ensured, through proper offset configuration, that CG PUSCH occasion(s) configured by the CG Configs in a single cycle are aligned with expected arrival moments of the corresponding Video frames as much as possible. In FIG. 3b, 3 CG PUSCH occasions are configured for each CG Config in a single cycle, and CG PUSCH occasions corresponding to different CG Configs are distinguished by using different filling patterns. It should be noted that, FIG. 3b shows only a scenario in which an Occasion set includes 3 CG PUSCH occasions. A quantity of CG PUSCH occasions included in one Occasion set is not specifically limited in this application, and whether the CG PUSCH occasions included in each Occasion set correspond to identical or different CG Configs is not limited.

The UE may indicate that from a starting Unused CG PUSCH occasion to a CG PUSCH occasion (assumed to be an Indicated used CG PUSCH occasion), all preceding CG PUSCH occasions do not need to be used; or from a starting Unused CG PUSCH occasion to a CG PUSCH occasion (assumed to be an Indicated unused CG PUSCH occasion), all CG PUSCH occasions do not need to be used; or M (>=0) CG PUSCH occasions starting from a starting Unused CG PUSCH occasion do not need to be used (that is, Unused CG PUSCH occasion(s)) .

The network device considers that the UE may use any PUSCH occasion starting from the Indicated used CG PUSCH occasion (or starting from a next CG PUSCH occasion of the Indicated unused CG PUSCH occasion), and a CG PUSCH occasion actually used in the CG PUSCH occasion(s) (which is similar to the First used CG PUSCH occasion described above, but in this case does not need to be indicated to the network device by the UE) starting from the Indicated used CG PUSCH occasion (or starting from the next CG PUSCH occasion of the Indicated unused CG PUSCH occasion) may be further determined based on the foregoing description.

The UCI carrying indication information herein may be carried by a Used CG PUSCH occasion.

The starting Unused CG PUSCH occasion may be determined in either of (1) and (2) below:
(1) explicitly indicated in the UCI by the UE, in either of (a) and (b) below:
   (a) a position or an index of the starting Unused CG PUSCH occasion is directly indicated; and
   (b) the UE (may use 1 bit) indicates whether an actually used CG PUSCH occasion is the Last used CG PUSCH occasion (refer to the foregoing description), and a next CG PUSCH occasion of the Last used CG PUSCH occasion is the starting Unused CG PUSCH occasion; and
(2) implicitly determined: for example, the UE uses a next CG PUSCH occasion of the Used CG PUSCH occasion carrying the UCI corresponding to the resource recycling information as the starting Unused CG PUSCH occasion.

It is assumed herein that the UE carries UCI in a CG PUSCH occasion and uses the UCI to carry the resource recycling information only when the UE needs to indicate the resource recycling information to the network device by using the UCI. In addition, it is assumed that the network device determines, through blind detection, whether a CG PUSCH occasion (actually used by the UE) carries UCI carrying resource recycling information.

For M Unused CG PUSCH occasion(s) starting from a starting Unused CG PUSCH occasion, the value M may be indicated in the UCI by the UE.

For an indicated (Indicated) used CG PUSCH occasion or an Indicated unused CG PUSCH occasion, the UE may indicate a position or an index thereof in the UCI.

When a quantity of CG PUSCH occasions that do not need to be used indicated by the UE is actually 0, the UE indicates a default value or a reserved value when indicating the position or the index of the starting Unused CG PUSCH occasion, and/or indicates the value M=0, and/or indicates a default value or a reserved value when indicating the position or the index of the Indicated used CG PUSCH occasion or the Indicated unused CG PUSCH occasion.

Indication manner 2: It is assumed that when needing to use a CG resource, the UE always occupies time-domain-consecutive CG PUSCH occasion(s), and the UE indicates a time period corresponding to Used/Unused CG PUSCH occasion(s), including a start moment and/or an end moment or a duration of the time period.

The moment or the duration herein may be indicated by using a system time-domain unit (a slot, a symbol, or the like), or may be indicated by using an absolute time unit (ms or the like).

In a possible implementation, the sending, by a terminal, first indication information to a network device includes:
indicating, by the terminal, at least one of the following to the network device. That is, the first indication information indicates at least one of the following:
(1) a start moment of the time period corresponding to the used CG PUSCH occasions;
(2) an end moment of the time period corresponding to the used CG PUSCH occasions;
(3) a duration of the time period corresponding to the used CG PUSCH occasions;
(4) a start moment of the time period corresponding to the unused CG PUSCH occasions;
(5) an end moment of the time period corresponding to the unused CG PUSCH occasions; and
(6) a duration of the time period corresponding to the unused CG PUSCH occasions.

Specifically, the following manners may be used for the foregoing indication manner 2:
Indication manner 2-1: The UE indicates time periods corresponding to used CG PUSCH occasion(s) used for carrying current high-layer service data.

In a possible implementation, the sending, by a terminal, first indication information to a network device further includes:
indicating, by the terminal to the network device, a first time period corresponding to used CG PUSCH occasions used for carrying current service data. That is, the first indication information indicates the first time period corresponding to the used CG PUSCH occasion.

A start moment of the first time period is a start moment or an end moment of a first used CG PUSCH occasion.

The first used CG PUSCH occasion is either of the following:
(1) a first CG PUSCH occasion that carries the service data; and
(2) a first CG PUSCH occasion that carries UCI corresponding to the first indication information.

A start moment of the time period may be a start/end moment of a First used CG PUSCH occasion (for determination thereof, refer to the corresponding description in the indication manner 1-1; in some cases, explicit indication is required, and in other cases, explicit indication is not required).

The UE indicates an end moment or a duration. Optionally, when the UE does not indicate the end moment or the duration or a special value is indicated for the end moment or the duration, it may be considered that a use duration expires at a predefined moment, for example, an expected arrival moment (when Jitter does not exist) or (an expected arrival moment-X) (when Jitter exists) of a next piece of high-layer service data (for example, a next Video frame).

It may be understood that, when a start/end moment of a CG PUSCH occasion is earlier than/no later than an end moment or a moment corresponding to a duration, it is considered that the CG PUSCH occasion is a Used CG PUSCH occasion.

Specifically, the following manners may be used for the foregoing indication manner 2:
Indication manner 2-2: The UE indicates a time period corresponding to Unused CG PUSCH occasion(s) after transmission of current high-layer service data is completed.

In a possible implementation, the sending, by a terminal, first indication information to a network device further includes:
sending, by the terminal to the network device, a second time period corresponding to unused CG PUSCH occasions after transmission of current service data is completed. That is, the first indication information indicates the second time period corresponding to the unused CG PUSCH occasion.

Specifically, the UE may indicate that all CG PUSCH occasions in a time range from a (start/end) moment corresponding to a starting Unused CG PUSCH occasion (for determination thereof, refer to the corresponding description in the indication manner 1-2; which may be explicitly indicated or implicitly determined) to an indicated end moment do not need to be used; or starting from the (start/end) moment corresponding to the starting Unused CG PUSCH occasion, all CG PUSCH occasions indicated in the duration do not need to be used.

The network device considers that the UE may use any CG PUSCH occasion after the end moment or a moment corresponding to the duration, and may further determine, based on the foregoing description, an actually used CG PUSCH occasion (which is similar to the First used CG PUSCH occasion described above, but does not need to be indicated to the network device by the UE in this case).

The UE indicates an end moment or a duration. Optionally, when the UE does not indicate the end moment or the duration or a special value is indicated for the end moment or the duration, it may be considered that a use duration expires at a predefined moment, for example, an expected arrival moment (when Jitter does not exist) or (an expected arrival moment-X) (when Jitter exists) of a next piece of high-layer service data (for example, a next Video frame).

Indication manner 3: The UE indicates an unused/to-be-used status of each CG PUSCH occasion in a time range.

For the information indicated in the indication manner 3, in a possible implementation, the sending, by a terminal, first indication information to a network device includes:
indicating, by the terminal by using a bitmap (Bitmap), the used CG PUSCH occasions and/or the unused CG PUSCH occasions in the preset indication cycle. That is, the first indication information indicates the used CG PUSCH occasions and/or the unused CG PUSCH occasions by using the Bitmap.

A length of the Bitmap satisfies either of the following:
(1) explicitly configured by high-layer signaling; and
(2) implicitly determined based on a quantity of CG PUSCH occasions involved in the indication cycle of the first indication information, or a quantity of serving cells or uplink carriers involved in the CG PUSCH occasions.

Specifically, the following manner may be used:
an unused/to-be-used status of each CG PUSCH occasion is explicitly indicated by using a Bitmap.

For example, each bit in the Bitmap indicates whether a corresponding CG PUSCH occasion (or CG PUSCH occasion(s) involved in a corresponding Serving cell) is Used (has been used or needs to be used, such as a value of 0) or Unused (has not been used or does not need to be used, such as a value of 1).

The length of the Bitmap may be determined in either of the following manners (1) and (2):
(1) Explicitly configured by high-layer signaling

For example, a quantity of bits corresponding to the Bitmap is configured by using RRC signaling.

Optionally, the UE does not expect the length of the Bitmap to be shorter/less than a quantity of CG PUSCH occasions involved in any indication cycle or a quantity of Serving cells (which is assumed to be a to-be-indicated quantity) involved in the CG PUSCH occasions involved in any indication cycle. For an indication cycle, when the length of the Bitmap is longer/greater than a to-be-indicated quantity, the UE uses only leading or trailing bits in the Bitmap that correspond to the to-be-indicated quantity, and the remaining bits may be ignored (for example, set to a reserved value or any value), or used for indicating resource state information corresponding to the following (when the current indication cycle corresponds to the leading bits in the Bitmap)/preceding (when the current indication cycle corresponds to the trailing bits in the Bitmap) indication cycle.

(2) Implicitly determined based on a quantity of CG PUSCH occasions involved in the indication cycle or a quantity of Serving cells involved in the CG PUSCH occasions.

The indication cycle herein is a cycle of a periodic/semi-persistent PUCCH/PUSCH carrying indication information. Refer to corresponding description in the following.

Both the terminal and the network may semi-statically determine, based on a CG Config configuration and a service Pattern, a quantity of CG PUSCH occasions involved in the indication cycle.

When the length of the Bitmap is the quantity of CG PUSCH occasions involved in the indication cycle:
bits corresponding thereto may not be included in the Bitmap for a CG PUSCH occasion where a corresponding resource cannot be timely recycled based on a transmission position of the indication information. Whether a CG PUSCH occasion is a CG PUSCH occasion where a corresponding resource cannot be timely recycled may be determined based on whether a time offset between the CG PUSCH occasion and a PUCCH/PUSCH (which is assumed to be a transmission PUCCH/PUSCH) of transmission indication information satisfies a Timeline requirement. For example, when a difference between a start/end moment of a CG PUSCH occasion (assumed to be right on a Timeline, that is, occurring at a later moment) and a start/end moment of transmission of the PUCCH/PUSCH is less than Min_Time, it is considered that the CG PUSCH occasion does not satisfy the Timeline requirement, and indication bits corresponding thereto do not need to be included in the Bitmap. The Timeline requirement herein mainly considers a minimum duration required by the network device to successfully decode the resource recycling information and allocate time-frequency resources corresponding to the Unused CG PUSCH occasion to another purpose (for example, retransmission) or another UE.

When the length of the Bitmap is the quantity of Serving cells involved in the CG PUSCH occasions in the indication cycle:
in this case, it is assumed that granularity of a resource state indication is a single Serving cell or all CG PUSCH occasion(s) corresponding to the Serving cell in the indication cycle.

For the information indicated in the indication manner 3, in a possible implementation, it is assumed that when configuring CG Config(s) carrying high-layer service data for the UE, the network device may further configure a resource recycling state list. For each resource recycling state, which Serving cells and/or which CG PUSCH occasions are eligible for resource recycling may be configured, and the UE selects a most matching status from the resource recycling state list and reports the most matching status to the network.

The sending, by a terminal, first indication information to a network device includes:
sending, by the terminal in the preset indication cycle, the first indication information to the network device according to a resource recycling state list;
where each resource recycling state in the resource recycling state list is used for indicating that all CG PUSCH occasions corresponding to each serving cell of at least one serving cell are used CG PUSCH occasions or unused CG PUSCH occasions, or each resource recycling state in the resource recycling state list is used for indicating that each CG PUSCH occasion of at least one CG PUSCH occasion corresponding to each serving cell of at least one serving cell is a used CG PUSCH occasion or an unused CG PUSCH occasion.

The terminal may indicate a most matching resource recycling state in a high-layer configured resource recycling state list, and for each resource recycling state, which Serving cells and/or which CG PUSCH occasions are eligible for resource recycling may be configured.

The resource recycling state may be configured as Serving cell granularity, that is, all CG PUSCH occasion(s) corresponding to Serving cell(s) are indicated as Used or Unused. Alternatively, the resource recycling state may be configured as CG PUSCH occasion granularity, that is, a Used/Unused status(es) of a CG PUSCH occasion(s) on a Serving cell(s) is/are indicated, and any involved CG PUSCH occasion is indicated as Used or Unused. When a CG PUSCH occasion on a Serving cell is indicated, a local index in the indication cycle may be used. For example, a first CG PUSCH occasion of the Serving cell in the indication cycle corresponds to a first CG PUSCH occasion of the Serving cell in the resource recycling state.

It may be understood that a quantity of bits corresponding to the resource recycling information is determined based on a length of the resource recycling state list, which is, for example, ceiling (log2(the length of the resource recycling state list)), where log2() is taking logarithm with base 2, and ceiling() is rounding up to an integer.

Optionally, when an indication of Serving cell granularity is used, a resource recycling state indicated by the UE is required to cover any Serving cell involved in the CG PUSCH occasion configured for the UE in the indication cycle; or when a Serving cell is not covered by the indicated resource recycling state, a status of any CG PUSCH occasion corresponding to the Serving cell in the indication cycle is assumed to be Used or Unused. Any Serving cell covered by the resource recycling state indicated by the UE is required to have at least one corresponding CG PUSCH occasion in the indication cycle; or when any Serving cell covered by the resource recycling state indicated by the UE does not have any corresponding CG PUSCH occasion in the indication cycle, a corresponding indication for the Serving cell is ignored on two sides.

Optionally, when an indication of CG PUSCH occasion granularity is used, a resource recycling state indicated by the UE for a Serving cell is required to cover any CG PUSCH occasion configured for the UE on the Serving cell in the indication cycle; or when a CG PUSCH occasion on the Serving cell is not covered by the indicated resource recycling state, a status thereof is assumed to be Used or Unused. When a quantity of candidate CG PUSCH occasions indicated for the Serving cell is greater than a quantity of CG PUSCH occasions configured for the UE on the Serving cell in the indication cycle (assumed to be a to-be-indicated quantity), the UE uses only leading or trailing candidate CG PUSCH occasions in the candidate CG PUSCH occasions that correspond to the to-be-indicated quantity, and the remaining candidate CG PUSCH occasions are ignored (for example, resource states allocated thereto are ignored) or are used for indicating resource state information corresponding to a following (when the to-be-indicated quantity of leading candidate CG PUSCH occasions are used)/preceding (when the to-be-indicated quantity of trailing candidate CG PUSCH occasions are used) indication cycle.

For the transmission indicated in the indication manner 3, in a possible implementation, the first indication information is carried by a periodic PUCCH or a periodic PUSCH, or the first indication information is carried by a semi-persistent PUCCH or a semi-persistent PUSCH.

An indication cycle of the first indication information is determined by any one of the following:
(1) explicitly configured by high-layer signaling;
(2) determined based on a cycle of a time division duplex TDD frame structure; and
(3) determined based on a cycle of service data.

The above indication information may be carried by a periodic/semi-persistent PDCCH/PUSCH. A cycle of the PDCCH/PUSCH (that is, the foregoing indication cycle) may be determined by any one of (1), (2), and (3) below:
(1) Explicitly configured by high-layer signaling
   For example, a cycle corresponding to periodic/semi-persistent PUCCH/PUSCH transmission is configured by RRC signaling, and a unit is system time-domain unit (a slot, a symbol, or the like) or absolute time unit (ms or the like).
(2) Determined based on a cycle of a TDD pattern (a TDD frame structure)
   The cycle may be directly a cycle of the TDD pattern or N times of the cycle of the TDD pattern, where N is a positive integer, and may be stipulated by a protocol or configured by high-layer signaling.
(3) Determined based on a cycle of a high-layer service

For example, for Video frames of an XR service, a cycle of a high-layer service is 1/FPS. The indication cycle may be directly the cycle of the high-layer service or M times of the cycle of the high-layer service, where M is a positive integer, and may be stipulated by a protocol or configured by high-layer signaling.

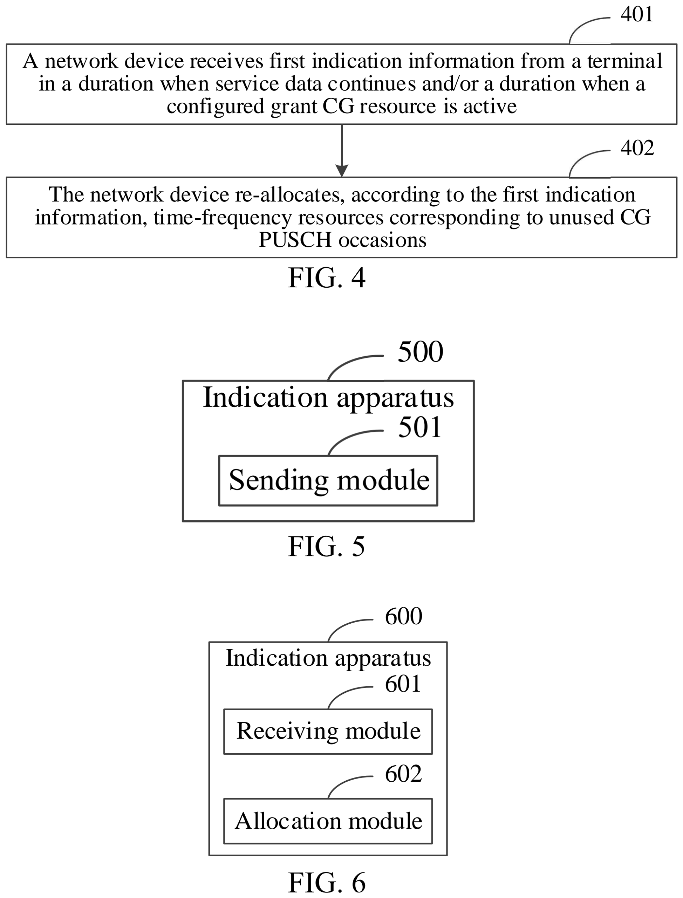

Referring to FIG. 4, an embodiment of this application provides an indication method. The method is performed by a network device. The method includes the following steps:
Step 401: A network device receives first indication information from a terminal in a duration when service data continues and/or a duration when a configured grant CG resource is active.
Step 402: The network device re-allocates, according to the first indication information, time-frequency resources corresponding to unused CG PUSCH occasions. It may be understood that, in this embodiment of this application, a manner in which time-frequency resources corresponding to CG PUSCH occasions are allocated and a purpose for which the time-frequency resources are used are not specifically limited.

The CG resource includes at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

In a possible implementation, the CG PUSCH occasion satisfies at least one of the following:
the CG PUSCH occasion corresponds to an activated and non-released first CG configuration;
the CG PUSCH occasion is a valid CG PUSCH occasion;
a transport block size TB size corresponding to the CG PUSCH occasion is greater than or equal to a preset TB size threshold; and
a physical priority PHY priority corresponding to the CG PUSCH occasion satisfies a preset PHY priority value.

Optionally, the first CG configuration may further satisfy at least one of the following:
a serving cell corresponding to the first CG configuration corresponds to a first carrier, the first carrier is an exclusive carrier carrying second service data or the first carrier belongs to an exclusive carrier set carrying second service data, and the second service data is any piece of service data corresponding to the terminal; and
the first CG configuration is used only for carrying third service data, and the third service data is any piece of service data corresponding to the terminal.

In a possible implementation, in a case that a carrier aggregation CA scenario is not supported or ordering or indexing of a plurality of CG PUSCH occasions is determined only in a range of a single serving cell, the ordering or indexing of the plurality of CG PUSCH occasions is associated with at least one of the following:
a start moment or an end moment of the CG PUSCH occasion;
a configuration index of a CG configuration corresponding to the CG PUSCH occasion; and
a TB size, a quantity of frequency-domain physical resource blocks PRB, and/or a quantity of time-domain symbols that correspond to the CG PUSCH occasion.

In a possible implementation, in a case that a CA scenario is supported or determination of ordering or indexing of a plurality of CG PUSCH occasions across serving cells is supported, the ordering or indexing of the plurality of CG PUSCH occasions is associated with at least one of the following:
a start moment or an end moment of the CG PUSCH occasion;
an index of a serving cell which the CG PUSCH occasion is located in or corresponds to;
a configuration index of a CG configuration corresponding to the CG PUSCH occasion; and
a TB size, a quantity of PRBs, and/or a quantity of time-domain symbols that correspond to the CG PUSCH occasion.

In a possible implementation, the first indication information indicates at least one of the following:
start positions or start indexes of the used CG PUSCH occasions;
end positions or end indexes of the used CG PUSCH occasions;
a quantity of the used CG PUSCH occasions;
start positions or start indexes of the unused CG PUSCH occasions;
end positions or end indexes of the unused CG PUSCH occasions; and
a quantity of the unused CG PUSCH occasions.

In a possible implementation, the receiving, by a network device, first indication information from a terminal further includes:
receiving, by the network device from the terminal, first information corresponding to the used CG PUSCH occasions;
where the first information is used for indicating N used CG PUSCH occasions starting from a first used CG PUSCH occasion, or the first information is used for indicating all used CG PUSCH occasions from a first used CG PUSCH occasion to a last used CG PUSCH occasion, and N is a positive integer; and
where the first used CG PUSCH occasion is either of the following:
   a first CG PUSCH occasion that carries the service data; and
   a first CG PUSCH occasion that carries uplink control information UCI corresponding to the first indication information.

The first used CG PUSCH occasion is any one of the following:
a first CG PUSCH occasion;
a first CG PUSCH occasion that carries the service data; and
a first CG PUSCH occasion that carries UCI corresponding to the first indication information.

The First used CG PUSCH occasion may be any one of the following:
(1) Fixedly a first CG PUSCH occasion in an Occasion set
(2) A first CG PUSCH occasion carrying high-layer service data for the UE

Herein, mainly a scenario in which other service data may need to be multiplexed on the CG PUSCH occasion for transmission or a situation in which the UE selects a Grant/CG PUSCH occasion based on implementation is considered.

Corresponding to that the terminal side uses the indication manner 1, the network device may determine the First used CG PUSCH occasion in either of the following manners:
(a) Blind detection by the network device
   It should be noted that whether a CG PUSCH occasion is actually used by the UE may be detected based on DM-RS (for example, by using energy detection or sequence detection). In addition, whether the CG PUSCH occasion actually used by the UE carries high-layer service data may be identified by using an LCID in a carried TB. For example, an LCID of a MAC Sub-PDU in the TB corresponds to at least one Logical channel corresponding to the high-layer service data.
(b) Explicitly indicated by the UE

In this case, the First used CG PUSCH occasion may be indicated in same UCI as the value N or the Last used CG PUSCH occasion, or may be indicated in independent UCI. In this case, the independent UCI may be carried by a PUCCH or another PUSCH.

It may be understood that, in addition to this manner, other manners of determining the First used CG PUSCH occasion do not need to be explicitly indicated by the UE.

### (3) A first CG PUSCH occasion that carries UCI corresponding to resource recycling information

It is assumed herein that the UE carries UCI in a CG PUSCH occasion (that is, the UCI is carried on a CG PUSCH) and uses the UCI to carry the resource recycling information only when the UE needs to indicate the resource recycling information to the network device by using the UCI. In addition, it is assumed that the network device determines, through blind detection, whether a CG PUSCH occasion (actually used by the UE) carries UCI carrying resource recycling information.

For the N Used CG PUSCH occasion(s) starting from the First used CG PUSCH occasion (that is, the start position), a value N may be indicated in the UCI by the UE.

When the UE indicates the Last used CG PUSCH occasion, either of the following manners may be used:
(a) the UE explicitly indicates a position or an index of the Last used CG PUSCH occasion; and
(b) the UE (may use 1 bit) indicates whether an actually used CG PUSCH occasion is the Last used CG PUSCH occasion.

When the UE indicates that the actually used CG PUSCH occasion is the Last used CG PUSCH occasion (for example, when the UE has completed transmission of high-layer service data by using used CG PUSCH occasion(s) in the Occasion set, a last CG PUSCH occasion in the Used CG PUSCH occasion(s) is indicated as the Last used CG PUSCH occasion), the UE and the network device may consider that all the remaining CG PUSCH occasion(s) starting from a next CG PUSCH occasion in the Occasion set are Unused CG PUSCH occasion(s).

It is assumed herein that the UE carries UCI in each actually occupied CG PUSCH occasion (that is, the UCI is carried on the CG PUSCH) and indicates whether the CG PUSCH occasions is the Last used CG PUSCH occasion.

In a possible implementation, the receiving, by a network device, first indication information from a terminal further includes:
receiving, by the network device from the terminal, second information corresponding to the unused CG PUSCH occasions;
where the second information is used for indicating any one of the following:
   starting from a first unused CG PUSCH occasion, all CG PUSCH occasions previous to a first CG PUSCH occasion do not need to be used;
   all CG PUSCH occasions from the first unused CG PUSCH occasion to the first CG PUSCH occasion do not need to be used; and
   M CG PUSCH occasions starting from the first unused CG PUSCH occasions do not need to be used, M being a positive integer;
   where the first unused CG PUSCH occasion is explicitly indicated in the UCI by the terminal, or the first unused CG PUSCH occasion is implicitly determined according to a UCI transmission status.

In a possible implementation, the first indication information indicates at least one of the following:
a start moment of the time period corresponding to the used CG PUSCH occasions;
an end moment of the time period corresponding to the used CG PUSCH occasions;
a duration of the time period corresponding to the used CG PUSCH occasions;
a start moment of the time period corresponding to the unused CG PUSCH occasions;
an end moment of the time period corresponding to the unused CG PUSCH occasions; and
a duration of the time period corresponding to the unused CG PUSCH occasions.

In a possible implementation, the first indication information indicates a first time period corresponding to used CG PUSCH occasions used for carrying current service data;
where a start moment of the first time period is a start moment or an end moment of a first used CG PUSCH occasion;
where the first used CG PUSCH occasion is either of the following:
   a first CG PUSCH occasion that carries the service data; and
   a first CG PUSCH occasion that carries UCI corresponding to the first indication information.

In a possible implementation, the first indication information indicates a second time period corresponding to unused CG PUSCH occasions after transmission of current service data is completed.

In a possible implementation, in the preset indication cycle, the first indication information indicates, by using a bitmap Bitmap, the used CG PUSCH occasions and/or the unused CG PUSCH occasions;
where a length of the Bitmap satisfies either of the following:
explicitly configured by high-layer signaling; and
implicitly determined based on a quantity of CG PUSCH occasions involved in the indication cycle of the first indication information, or a quantity of serving cells or uplink carriers involved in the CG PUSCH occasions.

In a possible implementation, the receiving, by a network device, first indication information from a terminal includes:
configuring, by the network device, a resource recycling state list for the terminal; where it is assumed that when configuringCG Config(s) carrying high-layer service data for the UE, the network device may further configure a resource recycling state list, for each resource recycling state, which Serving cells and/or which CG PUSCH occasions are eligible for resource recycling may be configured, and the UE selects a most matching status from the resource recycling state list and reports the most matching status to the network; and
the network device receives, from the terminal, the first indication information in the preset indication cycle;
where each resource recycling state in the resource recycling state list is used for indicating that all CG PUSCH occasions corresponding to each serving cell of at least one serving cell are used CG PUSCH occasions or unused CG PUSCH occasions, or each resource recycling state in the resource recycling state list is used for indicating that each CG PUSCH occasion of at least one CG PUSCH occasion corresponding to each serving cell of at least one serving cell is a used CG PUSCH occasion or an unused CG PUSCH occasion.

The resource recycling state may be configured as Serving cell granularity, that is, all CG PUSCH occasion(s) corresponding to a Serving cell(s) is/are indicated as Used or Unused. Alternatively, the resource recycling state may be configured as CG PUSCH occasion granularity, that is, a Used/Unused status(es) of a CG PUSCH occasion(s) on a Serving cell(s) is/are indicated, and any involved CG PUSCH occasion is indicated as Used or Unused. When a CG PUSCH occasion on a Serving cell is indicated, a local index in the indication cycle may be used. For example, a first CG PUSCH occasion of the Serving cell in the indication cycle corresponds to a first PUSCH occasion of the Serving cell in the resource recycling state.

In a possible implementation, the first indication information is carried by a periodic PUCCH or a periodic PUSCH, or the first indication information is carried by a semi-persistent PUCCH or a semi-persistent PUSCH; and
an indication cycle of the first indication information is determined by any one of the following:
explicitly configured by high-layer signaling; and
determined based on a cycle of a time division duplex TDD frame structure; and
determined based on a cycle of service data.

The indication method provided in this embodiment of this application may be performed by an indication apparatus. In this embodiment of this application, an indication apparatus provided in this embodiment of this application is described by using an example in which the indication apparatus performs the indication method.

The indication method provided in this embodiment of this application may be performed by an indication apparatus. In this embodiment of this application, an indication apparatus provided in this embodiment of this application is described by using an example in which the indication apparatus performs the indication method.

Referring to FIG. 5, an embodiment of this application provides an indication apparatus 500 applied to a terminal. The apparatus includes:
a sending module 501, configured to send first indication information to a network device in a duration when service data continues and/or a duration when a configured grant CG resource is active;
where the CG resource includes at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

Optionally, the CG PUSCH occasion satisfies at least one of the following:
the CG PUSCH occasion corresponds to an activated and non-released first CG configuration;
the CG PUSCH occasion is a valid CG PUSCH occasion;
a TB size corresponding to the CG PUSCH occasion is greater than or equal to a preset TB size threshold; and
a PHY priority corresponding to the CG PUSCH occasion satisfies a preset PHY priority value.

Optionally, the first CG configuration may further satisfy at least one of the following:
a serving cell corresponding to the first CG configuration corresponds to a first carrier, the first carrier is an exclusive carrier carrying first service data or the first carrier belongs to an exclusive carrier set carrying first service data, and the first service data is any piece of service data corresponding to the terminal; and
the first CG configuration is used only for carrying second service data, and the second service data is any piece of service data corresponding to the terminal.

Optionally, the apparatus further includes:
a first determination module, configured to, in a case that a CA scenario is not supported or ordering or indexing of a plurality of CG PUSCH occasions is determined only in a range of a single serving cell, determine, by the terminal, the ordering or indexing of the plurality of CG PUSCH occasions according to at least one of the following:
a start moment or an end moment of the CG PUSCH occasion;
a configuration index of a CG configuration corresponding to the CG PUSCH occasion; and
a TB size, a quantity of PRBs, and/or a quantity of time-domain symbols that correspond to the CG PUSCH occasion.

Optionally, the apparatus further includes:
a second determination module, configured to, in a case that a CA scenario is supported or determination of ordering or indexing of a plurality of CG PUSCH occasions across serving cells is supported, determine, by the terminal, the ordering or indexing of the plurality of CG PUSCH occasions according to at least one of the following:
a start moment or an end moment of the CG PUSCH occasion;
an index of a serving cell which the CG PUSCH occasion is located in or corresponds to;
a configuration index of a CG configuration corresponding to the CG PUSCH occasion; and
a TB size, a quantity of PRBs, and/or a quantity of time-domain symbols that correspond to the CG PUSCH occasion.

Optionally, the first indication information indicates at least one of the following:
start positions or start indexes of the used CG PUSCH occasions;
end positions or end indexes of the used CG PUSCH occasions;
a quantity of the used CG PUSCH occasions;
start positions or start indexes of the unused CG PUSCH occasions;
end positions or end indexes of the unused CG PUSCH occasions; and
a quantity of the unused CG PUSCH occasions.

Optionally, the sending module is specifically configured to:
send, by the terminal, first information corresponding to the used CG PUSCH occasions to the network device;
where the first information is used for indicating N used CG PUSCH occasions starting from a first used CG PUSCH occasion, or the first information is used for indicating all used CG PUSCH occasions from a first used CG PUSCH occasion to a last used CG PUSCH occasion, and N is a positive integer; and
where the first used CG PUSCH occasion is either of the following:
   a first CG PUSCH occasion that carries the service data; and
   a first CG PUSCH occasion that carries UCI corresponding to the first indication information.

Optionally, the sending module is specifically configured to:
send, by the terminal, second information corresponding to the unused CG PUSCH occasions to the network device;
where the second information is used for indicating any one of the following:
   starting from a first unused CG PUSCH occasion, all CG PUSCH occasions previous to a first CG PUSCH occasion do not need to be used;
   all CG PUSCH occasions from the first unused CG PUSCH occasion to the first CG PUSCH occasion do not need to be used; and
   M CG PUSCH occasions starting from the first unused CG PUSCH occasions do not need to be used, M being a positive integer;
   where the first unused CG PUSCH occasion is explicitly indicated in the UCI by the terminal, or the first unused CG PUSCH occasion is implicitly determined according to a UCI transmission status.

Optionally, the first indication information indicates at least one of the following:
a start moment of the time period corresponding to the used CG PUSCH occasions;
an end moment of the time period corresponding to the used CG PUSCH occasions;
a duration of the time period corresponding to the used CG PUSCH occasions;
a start moment of the time period corresponding to the unused CG PUSCH occasions;
an end moment of the time period corresponding to the unused CG PUSCH occasions; and
a duration of the time period corresponding to the unused CG PUSCH occasions.

Optionally, the first indication information is used for indicating a first time period corresponding to used CG PUSCH occasions used for carrying current service data;
where a start moment of the first time period is a start moment or an end moment of a first used CG PUSCH occasion;
where the first used CG PUSCH occasion is either of the following:
a first CG PUSCH occasion that carries the service data; and
a first CG PUSCH occasion that carries UCI corresponding to the first indication information.

Optionally, the first indication information indicates a second time period corresponding to unused CG PUSCH occasions after transmission of current service data is completed.

Optionally, the sending module is specifically configured to:
in the preset indication cycle, indicate, by the first indication information by using a Bitmap, the used CG PUSCH occasions and/or the unused CG PUSCH occasions;
where a length of the Bitmap satisfies either of the following:
   explicitly configured by high-layer signaling; and
   implicitly determined based on a quantity of CG PUSCH occasions involved in the indication cycle of the first indication information, or a quantity of serving cells or uplink carriers involved in the CG PUSCH occasions.

Optionally, the sending module is specifically configured to:
send, by the terminal in the preset indication cycle, the first indication information to the network device according to a resource recycling state list;
where each resource recycling state in the resource recycling state list is used for indicating that all CG PUSCH occasions corresponding to each serving cell of at least one serving cell are used CG PUSCH occasions or unused CG PUSCH occasions, or each resource recycling state in the resource recycling state list is used for indicating that each CG PUSCH occasion of at least one CG PUSCH occasion corresponding to each serving cell of at least one serving cell is a used CG PUSCH occasion or an unused CG PUSCH occasion.

Optionally, the first indication information is carried by a periodic PUCCH or a periodic PUSCH, or the first indication information is carried by a semi-persistent PUCCH or a semi-persistent PUSCH; and
an indication cycle of the first indication information is determined by any one of the following:
explicitly configured by high-layer signaling; and
determined based on a cycle of a TDD frame structure; and
determined based on a cycle of the service data.

Referring to FIG. 6, an embodiment of this application provides an indication apparatus 600 applied to a network device. The apparatus includes:
a receiving module 601, configured to receive, by the network device, first indication information from a terminal in a duration when service data continues and/or a duration when a configured grant CG resource is active; and
an allocation module 602, configured to re-allocate, by the network device according to the first indication information, time-frequency resources corresponding to unused CG PUSCH occasions;
where the CG resource includes at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

Optionally, the CG PUSCH occasion satisfies at least one of the following:
the CG PUSCH occasion corresponds to an activated and non-released first CG configuration;
the CG PUSCH occasion is a valid CG PUSCH occasion;
a transport block size TB size corresponding to the CG PUSCH occasion is greater than or equal to a preset TB size threshold; and
a physical priority PHY priority corresponding to the CG PUSCH occasion satisfies a preset PHY priority value.

Optionally, in a case that a carrier aggregation CA scenario is not supported or ordering or indexing of a plurality of CG PUSCH occasions is determined only in a range of a single serving cell, the ordering or indexing of the plurality of CG PUSCH occasions is associated with at least one of the following:
a start moment or an end moment of the CG PUSCH occasion;
a configuration index of a CG configuration corresponding to the CG PUSCH occasion; and
a TB size, a quantity of frequency-domain physical resource blocks PRB, and/or a quantity of time-domain symbols that correspond to the CG PUSCH occasion.

Optionally, in a case that a CA scenario is supported or determination of ordering or indexing of a plurality of CG PUSCH occasions across serving cells is supported, the ordering or indexing of the plurality of CG PUSCH occasions is associated with at least one of the following:
a start moment or an end moment of the CG PUSCH occasion;
an index of a serving cell which the CG PUSCH occasion is located in or corresponds to;
a configuration index of a CG configuration corresponding to the CG PUSCH occasion; and
a TB size, a quantity of PRBs, and/or a quantity of time-domain symbols that correspond to the CG PUSCH occasion.

Optionally, the first indication information indicates at least one of the following:
start positions or start indexes of the used CG PUSCH occasions;
end positions or end indexes of the used CG PUSCH occasions;
a quantity of the used CG PUSCH occasions;
start positions or start indexes of the unused CG PUSCH occasions;
end positions or end indexes of the unused CG PUSCH occasions; and
a quantity of the unused CG PUSCH occasions.

Optionally, the receiving module is specifically configured to:
receive, by the network device from the terminal, first information corresponding to the used CG PUSCH occasions;
where the first information is used for indicating N used CG PUSCH occasions starting from a first used CG PUSCH occasion, or the first information is used for indicating all used CG PUSCH occasions from a first used CG PUSCH occasion to a last used CG PUSCH occasion, and N is a positive integer; and
where the first used CG PUSCH occasion is either of the following:
a first CG PUSCH occasion that carries the service data; and
a first CG PUSCH occasion that carries uplink control information UCI corresponding to the first indication information.

Optionally, the receiving module is specifically configured to:
receive, by the network device from the terminal, second information corresponding to the unused CG PUSCH occasions;
where the second information is used for indicating any one of the following:
   starting from a first unused CG PUSCH occasion, all CG PUSCH occasions previous to a first CG PUSCH occasion do not need to be used;
   all CG PUSCH occasions from the first unused CG PUSCH occasion to the first CG PUSCH occasion do not need to be used; and
   M CG PUSCH occasions starting from the first unused CG PUSCH occasions do not need to be used, M being a positive integer;
   where the first unused CG PUSCH occasion is explicitly indicated in the UCI by the terminal, or the first unused CG PUSCH occasion is implicitly determined according to a UCI transmission status.

Optionally, the first indication information indicates at least one of the following:
a start moment of the time period corresponding to the used CG PUSCH occasions;
an end moment of the time period corresponding to the used CG PUSCH occasions;
a duration of the time period corresponding to the used CG PUSCH occasions;
a start moment of the time period corresponding to the unused CG PUSCH occasions;
an end moment of the time period corresponding to the unused CG PUSCH occasions; and
a duration of the time period corresponding to the unused CG PUSCH occasions.

Optionally, the first indication information is used for indicating a first time period corresponding to used CG PUSCH occasions used for carrying current service data;
where a start moment of the first time period is a start moment or an end moment of a first used CG PUSCH occasion;
where the first used CG PUSCH occasion is either of the following:
a first CG PUSCH occasion that carries the service data; and
a first CG PUSCH occasion that carries UCI corresponding to the first indication information.

Optionally, the first indication information indicates a second time period corresponding to unused CG PUSCH occasions after transmission of current service data is completed.

Optionally, in the preset indication cycle, the first indication information indicates, by using a bitmap Bitmap, the used CG PUSCH occasions and/or the unused CG PUSCH occasions;
where a length of the Bitmap satisfies either of the following:
explicitly configured by high-layer signaling; and
implicitly determined based on a quantity of CG PUSCH occasions involved in the indication cycle of the first indication information, or a quantity of serving cells or uplink carriers involved in the CG PUSCH occasions.

Optionally, the receiving module is specifically configured to:
configure, by the network device, a resource recycling state list for the terminal; and
receive, by the network device, the first indication information in the preset indication cycle from the terminal;
where each resource recycling state in the resource recycling state list is used for indicating that all CG PUSCH occasions corresponding to each serving cell of at least one serving cell are used CG PUSCH occasions or unused CG PUSCH occasions, or each resource recycling state in the resource recycling state list is used for indicating that each CG PUSCH occasion of at least one CG PUSCH occasion corresponding to each serving cell of at least one serving cell is a used CG PUSCH occasion or an unused CG PUSCH occasion.

Optionally, the first indication information is carried by a periodic PUCCH or a periodic PUSCH, or the first indication information is carried by a semi-persistent PUCCH or a semi-persistent PUSCH; and
an indication cycle of the first indication information is determined by any one of the following:
explicitly configured by high-layer signaling; and
determined based on a cycle of a time division duplex TDD frame structure; and
determined based on a cycle of the service data.

The indication apparatus in this embodiment of this application may be an electronic device, for example, an electronic device having an operating system, or a component in an electronic device, such as an integrated circuit or a chip. The electronic device may be a terminal, or may be another device other than the terminal. For example, the terminal may include, but is not limited to, the above listed types of the terminal 11, and the another device may be a server, a network attached storage (Network Attached Storage, NAS), or the like, which is not specifically limited in this embodiment of this application.

The indication apparatus provided in this embodiment of this application can implement all processes implemented by the method embodiments in FIG. 2 and FIG. 4 and a same technical effect is achieved. Details are not described herein again to avoid repetition.

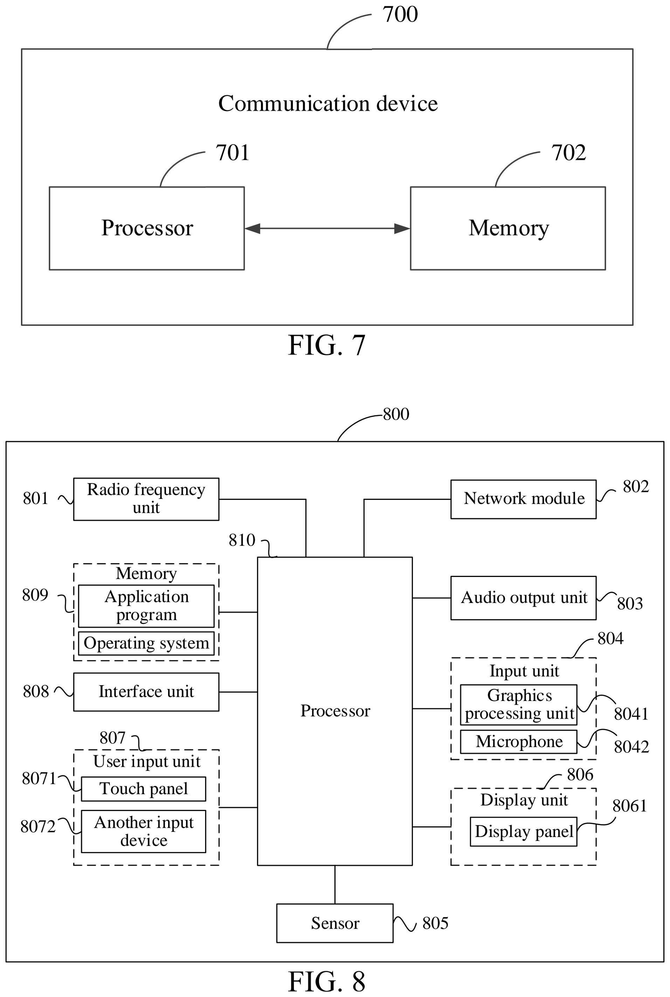

Optionally, as shown in FIG. 7, an embodiment of this application further provides a communication device 700, including a processor 701 and a memory 702. The memory 702 stores a program or an instruction executable on the processor 701. For example, when the communication device 700 is a terminal, and when the program or instruction is executed by the processor 701, steps in the embodiments of the indication method are implemented, and a same technical effect can be achieved. When the communication device 700 is a network device, and when the program or instruction is executed by the processor 701, steps in the embodiments of the indication method are implemented, and a same technical effect can be achieved. Details are not described herein again to avoid repetition.

An embodiment of this application further provides a terminal, including a processor and a communication interface. The communication interface is used for the terminal to send first indication information to a network device in a duration when service data continues and/or a duration when a CG resource is active; where the CG resource includes at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource. The terminal embodiment corresponds to the foregoing terminal-side method embodiment. Each implementation process and implementation of the foregoing method embodiment may be applied to this terminal embodiment, and a same technical effect can be achieved. Specifically, FIG. 8 is a schematic diagram of a hardware structure of a terminal implementing an embodiment of this application.

The terminal 800 includes, but is not limited to, at least part of the following components, such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (for example, a battery) that supplies power to the components. The power supply may be logically connected to the processor 810 through a power management system, so that functions such as charge and discharge management and power consumption management are implemented through the power management system. The terminal structure shown in FIG. 8 constitutes no limitation on the terminal. The terminal may include more or fewer components than those shown in the figures, some component combinations, or different component arrangements. Details are not described herein again.

It should be understood that, in this embodiment of this application, the input unit 804 may include a graphics processing unit (Graphics Processing Unit, GPU) 8041 and a microphone 8042, and the graphics processing unit 8041 processes image data of a still picture or a video obtained by an image capture apparatus (such as a camera) in a video capture mode or an image capture mode. The display unit 806 may include a display panel 8061. The display panel 6061 may be configured in a form of a liquid crystal display, an organic light-emitting diode, or the like. The user input unit 807 includes at least one of a touch panel 8071 and another input device 8072. The touch panel 8 071 is also referred to as a touch screen. The touch panel 8071 may include two parts: a touch detection apparatus and a touch controller. The another input device 8072 may include, but is not limited to, a physical keyboard, a functional key (such as a volume control key or a switch key), a track ball, a mouse, and a joystick. Details are not described herein again.

In this embodiment of this application, after receiving downlink data from a network device, the radio frequency unit 801 may transmit the downlink data to the processor 810 for processing. In addition, the radio frequency unit 801 may send uplink data to the network device. Generally, the radio frequency unit 801 includes, but is not limited to, an antenna, an amplifier, a transceiver, a coupler, a low noise amplifier, a duplexer, and the like.

The memory 809 may be configured to store a software program or instruction and various data. The memory 809 may mainly include a first storage area storing a program or an instruction and a second storage area storing data. The first storage area may store an operating system, an application program or an instruction required by at least one function (such as a sound playback function or an image display function), and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus dynamic random access memory (Direct Rambus RAM, DRRAM). The memory 809 in this embodiment of this application includes, but is not limited to, these memories and any other memories of a suitable type.

The processor 810 may include one or more processing units. Optionally, the processor 810 integrates an application processor and a modem. The application processor mainly processes operations related to an operating system, a user interface, an application program, and the like. The modem mainly processes a wireless communication signal, such as a baseband processor. It may be understood that the foregoing modem may not be integrated into the processor 810.

The radio frequency unit 801 is configured to send first indication information to a network device in a duration when service data continues and/or a duration when a CG resource is active;

where the CG resource includes at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

Optionally, the CG PUSCH occasion satisfies at least one of the following:
the CG PUSCH occasion corresponds to an activated and non-released first CG configuration;
the CG PUSCH occasion is a valid CG PUSCH occasion;
a TB size corresponding to the CG PUSCH occasion is greater than or equal to a preset TB size threshold; and
a PHY priority corresponding to the CG PUSCH occasion satisfies a preset PHY priority value.

Optionally, the first CG configuration may further satisfy at least one of the following:
a serving cell corresponding to the first CG configuration corresponds to a first carrier, the first carrier is an exclusive carrier carrying first service data or the first carrier belongs to an exclusive carrier set carrying first service data, and the first service data is any piece of service data corresponding to the terminal; and
the first CG configuration is used only for carrying second service data, and the second service data is any piece of service data corresponding to the terminal.

Optionally, the processor 810 is configured to, in a case that a CA scenario is not supported or ordering or indexing of a plurality of CG PUSCH occasions is determined only in a range of a single serving cell, determine, by the terminal, the ordering or indexing of the plurality of CG PUSCH occasions according to at least one of the following:
a start moment or an end moment of the CG PUSCH occasion;
a configuration index of a CG configuration corresponding to the CG PUSCH occasion; and
a TB size, a quantity of PRBs, and/or a quantity of time-domain symbols that correspond to the CG PUSCH occasion.

Optionally, the processor 810 is configured to, in a case that a CA scenario is supported or determination of ordering or indexing of a plurality of CG PUSCH occasions across serving cells is supported, determine, by the terminal, the ordering or indexing of the plurality of CG PUSCH occasions according to at least one of the following:
a start moment or an end moment of the CG PUSCH occasion;
an index of a serving cell which the CG PUSCH occasion is located in or corresponds to;
a configuration index of a CG configuration corresponding to the CG PUSCH occasion; and
a TB size, a quantity of PRBs, and/or a quantity of time-domain symbols that correspond to the CG PUSCH occasion.

Optionally, the radio frequency unit 801 is specifically configured to:
indicate, by the terminal to the network device, at least one of the following:
start positions or start indexes of the used CG PUSCH occasions;
end positions or end indexes of the used CG PUSCH occasions;
a quantity of the used CG PUSCH occasions;
start positions or start indexes of the unused CG PUSCH occasions;
end positions or end indexes of the unused CG PUSCH occasions; and
a quantity of the unused CG PUSCH occasions.

Optionally, the radio frequency unit 801 is specifically configured to:
send, by the terminal, first information corresponding to the used CG PUSCH occasions to the network device;
where the first information is used for indicating N used CG PUSCH occasions starting from a first used CG PUSCH occasion, or the first information is used for indicating all used CG PUSCH occasions from a first used CG PUSCH occasion to a last used CG PUSCH occasion, and N is a positive integer; and
where the first used CG PUSCH occasion is either of the following:
   a first CG PUSCH occasion that carries the service data; and
   a first CG PUSCH occasion that carries UCI corresponding to the first indication information.

Optionally, the radio frequency unit 801 is specifically configured to:
send, by the terminal, second information corresponding to the unused CG PUSCH occasions to the network device;
where the second information is used for indicating any one of the following:
   starting from a first unused CG PUSCH occasion, all CG PUSCH occasions previous to a first CG PUSCH occasion do not need to be used;
   all CG PUSCH occasions from the first unused CG PUSCH occasion to the first CG PUSCH occasion do not need to be used; and
   M CG PUSCH occasions starting from the first unused CG PUSCH occasions do not need to be used, M being a positive integer;
   where the first unused CG PUSCH occasion is explicitly indicated in the UCI by the terminal, or the first unused CG PUSCH occasion is implicitly determined according to a UCI transmission status.

Optionally, the radio frequency unit 801 is specifically configured to:
indicate, by the terminal to the network device, at least one of the following:
a start moment of the time period corresponding to the used CG PUSCH occasions;
an end moment of the time period corresponding to the used CG PUSCH occasions;
a duration of the time period corresponding to the used CG PUSCH occasions;
a start moment of the time period corresponding to the unused CG PUSCH occasions;
an end moment of the time period corresponding to the unused CG PUSCH occasions; and
a duration of the time period corresponding to the unused CG PUSCH occasions.

Optionally, the radio frequency unit 801 is specifically configured to:
indicate, by the terminal to the network device, a first time period corresponding to used CG PUSCH occasions used for carrying current service data;
where a start moment of the first time period is a start moment or an end moment of a first used CG PUSCH occasion;
where the first used CG PUSCH occasion is either of the following:
   a first CG PUSCH occasion that carries the service data; and
   a first CG PUSCH occasion that carries UCI corresponding to the first indication information.

Optionally, the radio frequency unit 801 is specifically configured to:
indicate, by the terminal to the network device, a second time period corresponding to unused CG PUSCH occasions after transmission of current service data is completed.

Optionally, the radio frequency unit 801 is specifically configured to:
in the preset indication cycle, indicate, by the terminal by using a Bitmap, the used CG PUSCH occasions and/or the unused CG PUSCH occasions;
where a length of the Bitmap satisfies either of the following:
   explicitly configured by high-layer signaling; and
   implicitly determined based on a quantity of CG PUSCH occasions involved in the indication cycle of the first indication information, or a quantity of serving cells or uplink carriers involved in the CG PUSCH occasions.

Optionally, the radio frequency unit 801 is specifically configured to:
send, by the terminal in the preset indication cycle, the first indication information to the network device according to a resource recycling state list;
where each resource recycling state in the resource recycling state list is used for indicating that all CG PUSCH occasions corresponding to each serving cell of at least one serving cell are used CG PUSCH occasions or unused CG PUSCH occasions, or each resource recycling state in the resource recycling state list is used for indicating that each CG PUSCH occasion of at least one CG PUSCH occasion corresponding to each serving cell of at least one serving cell is a used CG PUSCH occasion or an unused CG PUSCH occasion.

Optionally, the first indication information is carried by a periodic PUCCH or a periodic PUSCH, or the first indication information is carried by a semi-persistent PUCCH or a semi-persistent PUSCH; and
an indication cycle of the first indication information is determined by any one of the following:
explicitly configured by high-layer signaling; and
determined based on a cycle of a TDD frame structure; and
determined based on a cycle of the service data.

An embodiment of this application further provides a network device, including a processor and a communication interface. The communication interface is used for the network device to receive first indication information from a terminal in a duration when service data continues and/or a duration when a configured grant CG resource is active; and the network device re-allocates, according to the first indication information, time-frequency resources corresponding to unused CG PUSCH occasions; where the CG resource includes at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource. The network device embodiment corresponds to the foregoing network device method embodiment. Each implementation process and implementation of the foregoing method embodiment may be applied to the network device embodiment, and a same technical effect can be achieved.

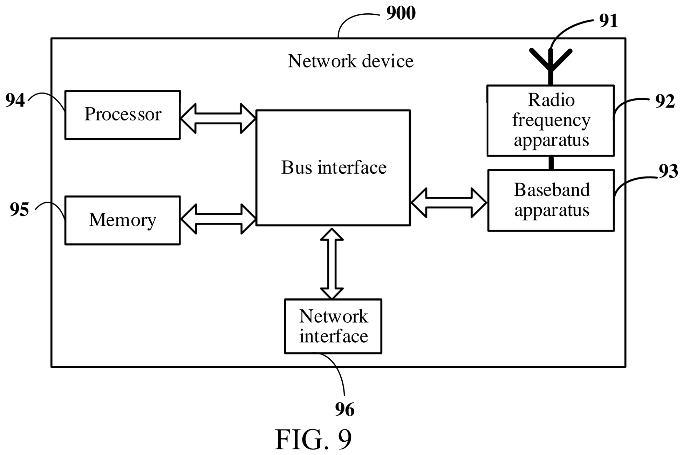

Specifically, an embodiment of this application further provides a network device. As shown in FIG. 9, the network device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-transmitted information and transmits the to-be-transmitted information to the radio frequency apparatus 92, and the radio frequency apparatus 92 processes the received to-be-transmitted information and then transmits the information through the antenna 91.

The method performed by the network device in the foregoing embodiments may be implemented in the baseband apparatus 93, and the baseband apparatus 93 includes a baseband processor.

The baseband apparatus 93 may include, for example, at least one baseband plate. A plurality of chips are arranged on the baseband plate. As shown in FIG. 9, one of the plurality of chips is, for example, the baseband processor, and is connected to the memory 95 through a bus interface, to invoke a program in the memory 95 to perform operations performed by the network device in the foregoing method embodiment.

The network device may further include a network interface 96. For example, the interface is a common public radio interface (common public radio interface, CPRI).

Specifically, the network device 900 in this embodiment of this application further includes: an instruction or a program stored in the memory 95 and executable on the processor 94, and the processor 94 invokes the instruction or program in the memory 95 to execute the method executed by the modules shown in FIG. 6, and achieve the same technical effect. Details are not described herein again to avoid repetition.

An embodiment of this application further provides a readable storage medium. The readable storage medium has a program or an instruction stored therein. When the program or instruction is executed by a processor, the processes of the foregoing method embodiments are implemented, and a same technical effect can be achieved. Details are not described herein again to avoid repetition.

The processor may be a processor in the terminal in foregoing embodiments. The readable storage medium includes a computer-readable storage medium, for example, a computer read only memory ROM, a random-access memory RAM, a magnetic disk, an optical disk, and the like.

An embodiment of this application further provides a chip. The chip includes a processor and a communication interface. The communication interface is coupled to the processor, the processor is configured to execute a program or an instruction to implement the processes of the foregoing method embodiments, and the same technical effect can be achieved. Details are not described herein again to avoid repetition.

It will be appreciated that the chip mentioned in this embodiment of this application may also be referred to as a system on chip, a system chip, a system on a chip, a system-on-a-chip, or the like.

An embodiment of this application further provides a computer program/program product. The computer program/program product is stored in a storage medium, the computer program/program product is executed by at least one processor to implement each process in the embodiment of the foregoing indication method, and a same technical effect can be achieved. Details are not described herein again to avoid repetition.

An embodiment of this application further provides a communication system, including: a terminal and a network device. The terminal may be configured to perform steps of the terminal-side method described above. The network device may be configured to perform steps of the network-side device method described above.

It should be noted that, the terms "include", "comprise", or any other variations thereof in this specification are intended to cover a non-exclusive inclusion, such that a process, method, article, or apparatus including a series of elements not only includes those elements, but also includes other elements that are not explicitly listed, or also includes elements inherent to such a process, method, article, or apparatus. Without more restrictions, the elements defined by the sentence "including/comprising a/an ..." do not exclude existence of other identical elements in the process, the method, the article, or the apparatus including the elements. Moreover, it should be noted that the scope of the method and apparatus in the implementations of this application is not limited to performing functions in the order shown or discussed, but may include performing functions in a substantially concurrent manner or in reverse order depending on the functionality involved. For example, the method described may be performed in an order different from that described, and various steps may also be added, omitted, or combined. Moreover, features described with reference to some examples may be combined in other examples.

According to the descriptions in the foregoing implementations, a person skilled in the art may clearly learn that the method according to the foregoing embodiments may be implemented by software plus a necessary universal hardware platform, and certainly may also be implemented by hardware, but in many cases, the former is preferred. Based on such understanding, the technical solution of this application, in essence or the part that makes contributions to the prior art, may be embodied in a form of a computer software product. The computer software product is stored in a storage medium (such as an ROM/RAM, a magnetic disk, or an optical disk) and includes several instructions for enabling a terminal (which may be a mobile phone, a computer, a server, an air conditioner, a network device, or the like) to execute the method in the embodiments of this application.

The embodiments of this application are described above with reference to the accompanying drawings. However, this application is not limited to the foregoing specific implementations. The foregoing specific implementations are only illustrative rather than restrictive. Inspired by this application, a person of ordinary skill in the art can still make many forms without departing from the essence of this application and the protection scope of the claims, all of which fall within the protection of this application.

## Claims

1. An indication method, comprising:
sending, by a terminal, first indication information to a network device in a duration when service data continues and/or a duration when a configured grant CG resource is active;
wherein the CG resource comprises at least one configured grant physical uplink shared channel occasion CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

2. The method according to claim 1, wherein the CG PUSCH occasion satisfies at least one of the following:
the CG PUSCH occasion corresponds to an activated and non-released first CG configuration;
the CG PUSCH occasion is a valid CG PUSCH occasion;
a transport block size TB size corresponding to the CG PUSCH occasion is greater than or equal to a preset TB size threshold; and
a physical priority PHY priority corresponding to the CG PUSCH occasion satisfies a preset PHY priority value.

3. The method according to claim 1, wherein the method further comprises:
in a case that a carrier aggregation CA scenario is not supported, or ordering or indexing of a plurality of CG PUSCH occasions is determined only in a range of a single serving cell, determining, by the terminal, the ordering or indexing of the plurality of CG PUSCH occasions according to at least one of the following:
a start moment of the CG PUSCH occasion;
an end moment of the CG PUSCH occasion;
a configuration index of a CG configuration corresponding to the CG PUSCH occasion;
a TB size corresponding to the CG PUSCH occasion;
a quantity of frequency-domain physical resource blocks PRB corresponding to the CG PUSCH occasion; and
a quantity of time-domain symbols corresponding to the CG PUSCH occasion.

4. The method according to claim 1, wherein the method further comprises:
in a case that a CA scenario is supported or determination of ordering or indexing of a plurality of CG PUSCH occasions across serving cells is supported, determining, by the terminal, the ordering or indexing of the plurality of CG PUSCH occasions according to at least one of the following:
a start moment of the CG PUSCH occasion;
an end moment of the CG PUSCH occasion;
an index of a serving cell which the CG PUSCH occasion is located in or corresponds to;
a configuration index of a CG configuration corresponding to the CG PUSCH occasion;
a TB size corresponding to the CG PUSCH occasion;
a quantity of PRBs corresponding to the CG PUSCH occasion; and
a quantity of time-domain symbols corresponding to the CG PUSCH occasion.

5. The method according to claim 1, wherein the first indication information indicates at least one of the following:
start positions or start indexes of the used CG PUSCH occasions;
end positions or end indexes of the used CG PUSCH occasions;
a quantity of the used CG PUSCH occasions;
start positions or start indexes of the unused CG PUSCH occasions;
end positions or end indexes of the unused CG PUSCH occasions; and
a quantity of the unused CG PUSCH occasions.

6. The method according to claim 1, wherein the sending, by a terminal, first indication information to a network device further comprises:
sending, by the terminal, first information corresponding to the used CG PUSCH occasions to the network device;
wherein the first information is used for indicating N used CG PUSCH occasions starting from a first used CG PUSCH occasion, or the first information is used for indicating all used CG PUSCH occasions from a first used CG PUSCH occasion to a last used CG PUSCH occasion, and N is a positive integer; and
wherein the first used CG PUSCH occasion is either of the following:
a first CG PUSCH occasion that carries the service data; and
a first CG PUSCH occasion that carries uplink control information UCI corresponding to the first indication information.

7. The method according to claim 1, wherein the sending, by a terminal, first indication information to a network device further comprises:
sending, by the terminal, second information corresponding to the unused CG PUSCH occasions to the network device;
wherein the second information is used for indicating any one of the following:
starting from a first unused CG PUSCH occasion, all CG PUSCH occasions previous to a first CG PUSCH occasion do not need to be used;
all CG PUSCH occasions from the first unused CG PUSCH occasion to the first CG PUSCH occasion do not need to be used; and
M CG PUSCH occasions starting from the first unused CG PUSCH occasions do not need to be used, M being a positive integer;
wherein the first unused CG PUSCH occasion is explicitly indicated in the UCI by the terminal, or the first unused CG PUSCH occasion is implicitly determined according to a UCI transmission status.

8. The method according to claim 1, wherein the first indication information indicates at least one of the following:
a start moment of the time period corresponding to the used CG PUSCH occasions;
an end moment of the time period corresponding to the used CG PUSCH occasions;
a duration of the time period corresponding to the used CG PUSCH occasions;
a start moment of the time period corresponding to the unused CG PUSCH occasions;
an end moment of the time period corresponding to the unused CG PUSCH occasions; and
a duration of the time period corresponding to the unused CG PUSCH occasions.

9. The method according to claim 1, wherein
the first indication information indicates a first time period corresponding to used CG PUSCH occasions used for carrying current service data;
wherein a start moment of the first time period is a start moment or an end moment of a first used CG PUSCH occasion;
wherein the first used CG PUSCH occasion is either of the following:
a first CG PUSCH occasion that carries the service data; and
a first CG PUSCH occasion that carries UCI corresponding to the first indication information.

10. The method according to claim 8, wherein the sending, by a terminal, first indication information to a network device further comprises:
the first indication information indicates a second time period corresponding to unused CG PUSCH occasions after transmission of current service data is completed.

11. The method according to claim 1, wherein
in the preset indication cycle, the first indication information indicates, by using a bitmap Bitmap, the used CG PUSCH occasions and/or the unused CG PUSCH occasions;
wherein a length of the Bitmap satisfies either of the following:
explicitly configured by high-layer signaling; and
implicitly determined based on a quantity of CG PUSCH occasions involved in the indication cycle of the first indication information, or a quantity of serving cells or uplink carriers involved in the CG PUSCH occasions.

12. The method according to claim 1, wherein the sending, by a terminal, first indication information to a network device comprises:
sending, by the terminal in the preset indication cycle, the first indication information to the network device according to a resource recycling state list;
wherein each resource recycling state in the resource recycling state list is used for indicating that all CG PUSCH occasions corresponding to each serving cell of at least one serving cell are used CG PUSCH occasions or unused CG PUSCH occasions, or each resource recycling state in the resource recycling state list is used for indicating that each CG PUSCH occasion of at least one CG PUSCH occasion corresponding to each serving cell of at least one serving cell is a used CG PUSCH occasion or an unused CG PUSCH occasion.

13. The method according to claim 11 or 12, wherein
the first indication information is carried by a periodic PUCCH or a periodic PUSCH, or the first indication information is carried by a semi-persistent PUCCH or a semi-persistent PUSCH; and
the indication cycle of the first indication information is determined by any one of the following:
explicitly configured by high-layer signaling;
determined based on a cycle of a time division duplex TDD frame structure; and
determined based on a cycle of the service data.

14. An indication method, comprising:
receiving, by a network device, first indication information from a terminal in a duration when service data continues and/or a duration when a configured grant CG resource is active; and
re-allocating, by the network device according to the first indication information, time-frequency resources corresponding to unused CG PUSCH occasions;
wherein the CG resource comprises at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

15. The method according to claim 14, wherein the CG PUSCH occasion satisfies at least one of the following:
the CG PUSCH occasion corresponds to an activated and non-released first CG configuration;
the CG PUSCH occasion is a valid CG PUSCH occasion;
a transport block size TB size corresponding to the CG PUSCH occasion is greater than or equal to a preset TB size threshold; and
a physical priority PHY priority corresponding to the CG PUSCH occasion satisfies a preset PHY priority value.

16. The method according to claim 14, wherein
in a case that a carrier aggregation CA scenario is not supported or ordering or indexing of a plurality of CG PUSCH occasions is determined only in a range of a single serving cell, the ordering or indexing of the plurality of CG PUSCH occasions is associated with at least one of the following:
a start moment of the CG PUSCH occasion;
an end moment of the CG PUSCH occasion;
a configuration index of a CG configuration corresponding to the CG PUSCH occasion;
a TB size corresponding to the CG PUSCH occasion;
a quantity of frequency-domain physical resource blocks PRB corresponding to the CG PUSCH occasion; and
a quantity of time-domain symbols corresponding to the CG PUSCH occasion.

17. The method according to claim 14, wherein
in a case that a CA scenario is supported or determination of ordering or indexing of a plurality of CG PUSCH occasions across serving cells is supported, the ordering or indexing of the plurality of CG PUSCH occasions is associated with at least one of the following:
a start moment of the CG PUSCH occasion;
an end moment of the CG PUSCH occasion;
an index of a serving cell which the CG PUSCH occasion is located in or corresponds to;
a configuration index of a CG configuration corresponding to the CG PUSCH occasion;
a TB size corresponding to the CG PUSCH occasion;
a quantity of PRBs corresponding to the CG PUSCH occasion; and
a quantity of time-domain symbols corresponding to the CG PUSCH occasion.

18. The method according to claim 14, wherein
the first indication information indicates at least one of the following:
start positions or start indexes of the used CG PUSCH occasions;
end positions or end indexes of the used CG PUSCH occasions;
a quantity of the used CG PUSCH occasions;
start positions or start indexes of the unused CG PUSCH occasions;
end positions or end indexes of the unused CG PUSCH occasions; and
a quantity of the unused CG PUSCH occasions.

19. The method according to claim 14, wherein the receiving, by a network device, first indication information from a terminal further comprises:
receiving, by the network device from the terminal, first information corresponding to the used CG PUSCH occasions;
wherein the first information is used for indicating N used CG PUSCH occasions starting from a first used CG PUSCH occasion, or the first information is used for indicating all used CG PUSCH occasions from a first used CG PUSCH occasion to a last used CG PUSCH occasion, and N is a positive integer; and
wherein the first used CG PUSCH occasion is either of the following:
a first CG PUSCH occasion that carries the service data; and
a first CG PUSCH occasion that carries uplink control information UCI corresponding to the first indication information.

20. The method according to claim 14, wherein the receiving, by a network device, first indication information from a terminal further comprises:
receiving, by the network device from the terminal, second information corresponding to the unused CG PUSCH occasions;
wherein the second information is used for indicating any one of the following:
starting from a first unused CG PUSCH occasion, all CG PUSCH occasions previous to a first CG PUSCH occasion do not need to be used;
all CG PUSCH occasions from the first unused CG PUSCH occasion to the first CG PUSCH occasion do not need to be used; and
M CG PUSCH occasions starting from the first unused CG PUSCH occasions do not need to be used, M being a positive integer;
wherein the first unused CG PUSCH occasion is explicitly indicated in the UCI by the terminal, or the first unused CG PUSCH occasion is implicitly determined according to a UCI transmission status.

21. The method according to claim 14, wherein the first indication information indicates at least one of the following:
a start moment of the time period corresponding to the used CG PUSCH occasions;
an end moment of the time period corresponding to the used CG PUSCH occasions;
a duration of the time period corresponding to the used CG PUSCH occasions;
a start moment of the time period corresponding to the unused CG PUSCH occasions;
an end moment of the time period corresponding to the unused CG PUSCH occasions; and
a duration of the time period corresponding to the unused CG PUSCH occasions.

22. The method according to claim 14, wherein
the first indication information indicates a first time period corresponding to a CG PUSCH occasion used for carrying current service data;
wherein a start moment of the first time period is a start moment or an end moment of a first used CG PUSCH occasion;
wherein the first used CG PUSCH occasion is either of the following:
a first CG PUSCH occasion that carries the service data; and
a first CG PUSCH occasion that carries UCI corresponding to the first indication information.

23. The method according to claim 14, wherein
the first indication information indicates a second time period corresponding to an unused CG PUSCH occasion after current service data transmission is completed.

24. The method according to claim 14, wherein
in the preset indication cycle, the first indication information indicates, by using a bitmap Bitmap, the used CG PUSCH occasions and/or the unused CG PUSCH occasions;
wherein a length of the Bitmap satisfies either of the following:
explicitly configured by high-layer signaling;
implicitly determined based on a quantity of CG PUSCH occasions involved in the indication cycle of the first indication information, or a quantity of serving cells or uplink carriers involved in the CG PUSCH occasions.

25. The method according to claim 14, wherein the receiving, by a network device, first indication information from a terminal comprises:
configuring, by the network device, a resource recycling state list for the terminal; and
receiving, by the network device, the first indication information in the preset indication cycle from the terminal;
wherein each resource recycling state in the resource recycling state list is used for indicating that all CG PUSCH occasions corresponding to each serving cell of at least one serving cell are used CG PUSCH occasions or unused CG PUSCH occasions, or each resource recycling state in the resource recycling state list is used for indicating that each CG PUSCH occasion of at least one CG PUSCH occasion corresponding to each serving cell of at least one serving cell is a used CG PUSCH occasion or an unused CG PUSCH occasion.

26. The method according to claim 24 or 25, wherein
the first indication information is carried by a periodic PUCCH or a periodic PUSCH, or the first indication information is carried by a semi-persistent PUCCH or a semi-persistent PUSCH; and
the indication cycle of the first indication information is determined by any one of the following:
explicitly configured by high-layer signaling;
determined based on a cycle of a time division duplex TDD frame structure; and
determined based on a cycle of the service data.

27. An indication apparatus, the apparatus being applied to a terminal, and the apparatus comprising:
a sending module, configured to send first indication information to a network device in a duration when service data continues and/or a duration when a CG resource is active;
wherein the CG resource comprises at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

28. An indication apparatus, the apparatus being applied to a network device, and the apparatus comprising:
a receiving module, configured to receive first indication information from a terminal in a duration when service data continues and/or a duration when a configured grant CG resource is active; and
an allocation module, configured to re-allocate, by the network device according to the first indication information, time-frequency resources corresponding to unused CG PUSCH occasions;
wherein the CG resource comprises at least one CG PUSCH occasion, and the first indication information is used for indicating positions or indexes of used CG PUSCH occasions and/or unused CG PUSCH occasions in the CG resource, or the first indication information is used for indicating a time period corresponding to the used CG PUSCH occasions and/or a time period corresponding to the unused CG PUSCH occasions in the CG resource, or the first indication information is used for indicating, in a preset indication cycle, the used CG PUSCH occasions and/or the unused CG PUSCH occasions in the CG resource.

29. A terminal, comprising a processor and a memory, the memory storing a program or an instruction executable on the processor, and when the program or instruction is executed by the processor, steps of the indication method according to any one of claims 1 to 13 being implemented.

30. A network device, comprising a processor and a memory, the memory storing a program or instructions executable on the processor, and when the program or instruction is executed by the processor, steps of the indication method according to any one of claims 14 to 26 being implemented.

31. A readable storage medium, the readable storage medium having a program or an instruction stored therein, when the program or instruction is executed by a processor, steps of the indication method according to any one of claims 1 to 13 being implemented, or steps of the indication method according to any one of claims 14 to 26 being implemented.
